# EUROPEAN PATENT APPLICATION

(11) **EP 4 410 565 A1**
(43) Date of publication of application: **07.08.2024**
(21) Application number: 22872541.2
(22) Date of filing: 22.07.2022
(51) Int. Cl.: B41M 5/00, B41J 2/01, B41J 2/21, C09D 11/322

(54) **INK-JET RECORDING METHOD AND METHOD FOR PRODUCING LAMINATE**

(30) Priority: 27.09.2021 JP 2021156435
(71) Applicant: FUJIFILM Corporation, Tokyo 106-8620 (JP)
(72) Inventor: IKOSHI, Masao, Ashigarakami-gun, Kanagawa 258-8577 (JP); MIZOE, Taiga, Ashigarakami-gun, Kanagawa 258-8577 (JP)
(74) Representative: Klunker IP Patentanwälte PartG mbB
(86) International application number: PCT/JP2022/028526
(87) International publication number: WO 2023/047785

(57) **Abstract**

Provided are an ink jet recording method including a step of preparing a white ink containing water and a white pigment, a step of preparing a colored ink containing water and a color pigment, a step of applying the colored ink onto an impermeable base material using an ink jet method to obtain a colored image, and a step of applying the white ink onto the colored image using an ink jet method to obtain a white image having a surface roughness Ra of 0.10 µm to 0.40 µm, and applications thereof.

## Description

### BACKGROUND OF THE INVENTION

### 1. Field of the Invention

The present disclosure relates to an ink jet recording method and a method of producing a laminate.

### 2. Description of the Related Art

In the related art, various examinations have been conducted on image recording carried out using a white ink and a colored ink (that is, a non-white ink).

For example, JP2018-94902A discloses an ink set including a non-white ink that contains a non-white coloring material having a volume average particle diameter of 30 to 110 nm and a white ink containing a white coloring material and thermoplastic resin particles, in which each of the inks is applied by an inkjet method.

### SUMMARY OF THE INVENTION

Meanwhile, an image recorded material in which a colored image and a white image are disposed in this order on an impermeable base material may be produced by an ink jet recording method of applying a colored ink and a white ink in this order on an impermeable base material respectively using an inkjet method.

As an example of this case, a pattern image of a character image or the like is recorded as a colored image using a base material having transparency as an impermeable base material, and a white image is recorded as a solid image to cover the entire region where the pattern image has been recorded. In this case, the pattern image as a colored image is visually recognized through the base material from an image non-recorded surface side (that is, a surface opposite to the surface on which the image has been recorded) of the base material.

Further, a laminate may be produced by laminating a base material for lamination on a white image of the image recorded material according to the above-described aspect, and the lamination strength in this case (that is, the lamination strength of the white image in the image recorded material and the base for lamination) is required to be improved.

An object of an aspect of the present disclosure is to provide an ink jet recording method that enables production of an image recorded material in which a colored image and a white image are disposed in this order on an impermeable base material and which has excellent lamination strength in a case where a base material for lamination is laminated on the white image.

An object of another aspect of the present disclosure is to provide a method of producing a laminate that enables production of a laminate which includes the image recorded material and a base material for lamination laminated on the white image of the image recorded material and has excellent lamination strength of the image recorded material and the base material for lamination.

Specific means for solving the above objects include the following aspects.
<1> An ink jet recording method comprising: a step of preparing a white ink containing water and a white pigment; a step of preparing a colored ink containing water and a color pigment; a step of applying the colored ink onto an impermeable base material using an ink jet method to obtain a colored image; and a step of applying the white ink onto the colored image using an ink jet method to obtain a white image having a surface roughness Ra of 0.10 µm to 0.40 µm.
<2> The inkjet recording method according to <1>, in which the white image has a surface roughness Ra of 0.15 µm to 0.30 µm.
<3> The inkjet recording method according to <1> or <2>, in which an amount of the white pigment in the white image is 0.7 g/m² or greater.
<4> The ink jet recording method according to any one of <1> to <3>, in which the white ink further contains resin particles.
<5> The ink jet recording method according to any one of <1> to <4>, in which the step of obtaining the white image includes: applying the white ink onto the colored image using an ink jet method; and heating and drying the white ink applied onto the colored image under a condition that a time from completion of the application to start of the heating and drying is 10 seconds or shorter, to obtain the white image.
<6> The inkjet recording method according to <5>, in which the heating and drying are performed within 70 seconds from the start of the heating and drying under a condition that a residual solvent amount in the white ink applied onto the colored image is 0.10 g/m² or less.
<7> The ink jet recording method according to any one of <1> to <6>, in which the step of obtaining the colored image includes: applying the colored ink onto the impermeable base material using an inkjet method; and heating and drying the colored ink applied onto the impermeable base material under a condition that a residual solvent amount is 0.10 g/m² or less, to obtain the colored image.
<8> The ink jet recording method according to any one of <1> to <7>, further comprising: a step of preparing a pretreatment liquid containing water and an aggregating agent; and a step of applying the pretreatment liquid onto the impermeable base material, which is provided before the step of obtaining the colored image, in which the step of obtaining the colored image is a step of obtaining the colored image by applying the colored ink onto a region of the impermeable base material, to which the pretreatment liquid has been applied.
<9> The inkjet recording method according to <8>, in which the step of applying the pretreatment liquid includes: applying the pretreatment liquid onto the impermeable base material; and heating and drying the pretreatment liquid applied onto the impermeable base material under a condition that a residual moisture content is 0.03 g/m² or less.
<10> A method of producing a laminate, comprising: a step of obtaining an image recorded material in which the colored image and the white image are disposed in this order on the impermeable base material using the inkjet recording method according to any one of <1> to <9>; and a step of laminating a base material for lamination on the white image of the image recorded material, to obtain a laminate.

According to an aspect of the present disclosure, it is possible to provide an ink jet recording method that enables production of an image recorded material in which a colored image and a white image are disposed in this order on an impermeable base material and which has excellent lamination strength in a case where a base material for lamination is laminated on the white image.

According to another aspect of the present disclosure, it is possible to provide a method of producing a laminate that enables production of a laminate which includes the image recorded material and a base material for lamination laminated on the white image of the image recorded material and has excellent lamination strength of the white image in the image recorded material and the base material for lamination.

### DESCRIPTION OF THE PREFERRED EMBODIMENTS

In the present specification, a numerical range shown using "to" indicates a range including the numerical values described before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. Further, in a numerical range described in the present specification, an upper limit or a lower limit described in a certain numerical range may be replaced with a value described in an example.

In the present specification, in a case where a plurality of substances corresponding to respective components in a composition are present, the amount of the respective components in the composition indicates the total amount of the plurality of substances present in the composition unless otherwise specified.

In the present specification, a combination of two or more preferred embodiments is a more preferred embodiment.

In the present specification, the meaning of the term "step" includes not only an independent step but also a step whose intended purpose is achieved even in a case where the step is not clearly distinguished from other steps.

In the present specification, the term "image" denotes an entire film formed with an ink, and the term "image recording" denotes formation of an image (that is, the film).

Further, the concept of "image" in the present specification also includes a solid image.

In the present specification, the colored ink denotes an ink of a color other than white, and the color pigment denotes a pigment of a color other than white.

The concept of the colored ink also includes a black ink, and the concept of the color pigment also includes a black pigment.

In the present specification, the concept of "(meth)acrylate" includes both acrylate and methacrylate.

The concept of "(meth)acryl" includes both acryl and methacryl.

The concept "alkylene glycol" includes both monoalkylene glycol and polyalkylene glycol.

The concept "alkylene glycol alkyl ether" includes monoalkylene glycol monoalkyl ether, monoalkylene glycol polyalkyl ether, polyalkylene glycol monoalkyl ether, and polyalkylene glycol polyalkyl ether.

### [Ink Jet Recording Method]

An ink jet recording method of the present disclosure (hereinafter, also simply referred to as "recording method") includes a step of preparing a white ink containing water and a white pigment, a step of preparing a colored ink containing water and a color pigment, a step of applying the colored ink onto an impermeable base material using an ink jet method to obtain a colored image, and a step of applying the white ink onto the colored image using an inkjet method to obtain a white image having a surface roughness Ra of 0.10 µm to 0.40 µm.

The recording method of the present disclosure may include other steps as necessary.

According to the recording method of the present disclosure, an image recorded material in which a colored image and a white image are disposed in this order on an impermeable base material and which has excellent lamination strength in a case where a base material for lamination is laminated on the white image (that is, the lamination strength of the white image in the image recorded material and the base material for lamination) can be produced.

The reason why such an effect is exhibited is assumed as follows.

In the recording method of the present disclosure, it is considered that in a case where the surface roughness Ra of the white image on the colored image is 0.10 µm or greater, the contact area between the white image and the base material for lamination can be increased in a case of further lamination of the base material for lamination on the white image. As a result, the lamination strength of the image recorded material (that is, the lamination strength of the white image in the image recorded material and the base material for lamination) is considered to be improved.

Further, it is considered that in a case where the surface roughness Ra of the white image to be recorded on the colored image is 0.40 µm or less, the followability of the base material for lamination with respect to the surface of the white image is improved (that is, generation of a gap between the surface of the white image and the base material for lamination is suppressed) and, as a result, the lamination strength of the image recorded material is improved in a case of lamination of the base material for lamination on the white image.

In the present disclosure, the surface roughness Ra of the white image on the colored image denotes the arithmetic average roughness Ra of the surface of the white image on the colored image in conformity with JIS B 0601:2001.

The surface roughness Ra of the white image on the colored image is measured with, for example, a color 3D laser microscope "VK-9710" (manufactured by KEYENCE CORPORATION).

In the recording method of the present disclosure, the white image is recorded such that the surface roughness Ra of the white image to be recorded on the colored image is in a range of 0.10 µm to 0.40 µm.

A method of adjusting the surface roughness Ra of the white image to be in a range of 0.10 µm to 0.40 µm is appropriately selected.

For example, the surface roughness Ra of the white image to be formed on the colored image can be adjusted to be in a range of 0.10 µm to 0.40 µm by appropriately selecting a combination of the composition of the colored ink (for example, the particle diameter of the color pigment, the amount of the color pigment, the presence or absence of resin particles, and the like) and the conditions for forming a colored image (for example, a combination of the conditions for applying the colored ink and the conditions for drying the colored ink) and a combination of the composition of the white ink (for example, the particle diameter of the white pigment, the amount of the white pigment, the presence or absence of resin particles, and the like) and the conditions for forming a white image (for example, a combination of the conditions for applying the white ink and the conditions for drying the white ink).

Hereinafter, each step of the recording method according to the present disclosure will be described.

### <Step of preparing white ink>

The recording method of the present disclosure includes a step of preparing a white ink containing water and a white pigment.

Hereinafter, the white ink prepared in the present step will be described.

### (Water)

The white ink contains water.

The content of water is preferably 30% by mass or greater, more preferably 40% by mass or greater, and still more preferably 50% by mass or greater with respect to the total amount of the white ink.

The upper limit of the content of water depends on the amount of other components, but is preferably 90% by mass or less, more preferably 80% by mass or less, and still more preferably 70% by mass or less with respect to the total amount of the white ink.

### (White pigment)

The white ink contains a white pigment.

The white pigment may be a pigment exhibiting a white color, and the kind thereof is not particularly limited.

Examples of the white pigment include inorganic pigments (that is, particles) such as titanium oxide, strontium titanate, barium titanate, zinc oxide, magnesium oxide, zirconium oxide, aluminum oxide, barium sulfate, silica, talc, mica, aluminum hydroxide, calcium silicate, aluminum silicate, and zinc sulfide.

As the white pigment, particles having titanium atoms are preferable, and titanium oxide particles are more preferable.

The average particle diameter of the white pigment is preferably 200 nm or greater, more preferably 250 nm or greater, and still more preferably 280 nm or greater.

As the average particle diameter of the white pigment increases, the surface roughness Ra of the white image to be obtained is likely to be adjusted to 0.10 µm or greater.

The average particle diameter of the white pigment is preferably 550 nm or less, more preferably 450 nm or less, and still more preferably 400 nm or less.

As the average particle diameter of the white pigment decreases, the surface roughness Ra of the white image to be obtained is likely to be adjusted to 0.0.40 µm or less.

In the present disclosure, the particle size distribution of the pigment may be any of wide particle size distribution or monodispersed particle size distribution.

The average particle diameter and the particle size distribution of the pigment are acquired by measuring the volume average particle diameter using a particle size distribution measuring device, for example, "NANOTRAC UPA-EX150" (product name, manufactured by Nikkiso Co., Ltd.) according to a dynamic light scattering method.

In a case where the pigment is coated with the pigment dispersing agent, the average particle diameter of the pigment denotes the average particle diameter of the pigment coated with the pigment dispersing agent.

The content of the white pigment is preferably 10% by mass or greater and more preferably 14% by mass or greater with respect to the total amount of the white ink.

As the content of the white pigment with respect to the total amount of the white ink increases, the surface roughness Ra of the white image to be obtained is likely to be adjusted to 0.10 µm or greater.

Further, the content of the white pigment is preferably 25% by mass or less and more preferably 20% by mass or less with respect to the total amount of the white ink.

As the content of the white pigment with respect to the total amount of the white ink decreases, the surface roughness Ra of the white image to be obtained is likely to be adjusted to 0.40 µm or less.

### (Organic solvent)

From the viewpoint of jettability from an ink jet head (hereinafter, also simply referred to as "jettability"), it is preferable that the white ink contains an organic solvent.

From the viewpoint of further improving the jettability, it is more preferable that the white ink contains a first organic solvent which is an organic solvent having a boiling point of 120°C or higher.

In the present disclosure, "boiling point" denotes a boiling point at 1 atm (101325 Pa). The boiling point is measured by a boiling point meter, and is measured using, for example, a boiling point measuring device (product name: "DosaTherm 300", manufactured by Titan Technologies, K.K.).

Examples of the organic solvent having a boiling point of 120°C or higher as the first organic solvent include an alcohol such as 1,3-butanediol (207°C), 1,4-butanediol (228°C), benzyl alcohol (205°C), or terpineol (217°C); alkylene glycol such as ethylene glycol (197°C), diethylene glycol (244°C), triethylene glycol (287°C), propylene glycol (187°C), or dipropylene glycol (230°C); alkylene glycol alkyl ether such as diethylene glycol monomethyl ether (194°C), diethylene glycol monoethyl ether (202°C), diethylene glycol monobutyl ether (231°C), diethylene glycol dimethyl ether (162°C), diethylene glycol ethyl methyl ether (176°C), diethylene glycol isopropyl methyl ether (179°C), triethylene glycol monomethyl ether (249°C), triethylene glycol dimethyl ether (216°C), propylene glycol monomethyl ether (121°C), propylene glycol monobutyl ether (170 °C), propylene glycol monopropyl ether (150°C), 3-methoxy-3-methyl-1-butanol (174°C), diethylene glycol monohexyl ether (261°C or higher), propylene glycol monomethyl ether propionate (160°C), methyl cellosolve (ethylene glycol monomethyl ether, 125°C), ethyl cellosolve (ethylene glycol monoethyl ether, 135°C), butyl cellosolve (ethylene glycol monobutyl ether, 171°C), ethylene glycol mono-tert-butyl ether (153°C), tripropylene glycol monomethyl ether (243°C), or dipropylene glycol monomethyl ether (188°C); an ester such as ethylene glycol monomethyl ether acetate (145°C), diethylene glycol monoethyl ether acetate (217°C), ethyl acetate (154°C), ethyl lactate (154°C), or 3-methoxybutyl acetate (172°C); and a ketone such as diacetone alcohol (169°C), cyclohexanone (156°C), or cyclopentanone (131°C).

In the examples described above, the numerical values in the parentheses denote boiling points.

In a case where the white ink contains a first organic solvent, the white ink may further contain an organic solvent having a boiling point of lower than 120°C.

The proportion of the first organic solvent in the organic solvent contained in the white ink is preferably 50% by mass or greater, more preferably 80% by mass or greater, and still more preferably 90% by mass or greater.

The proportion thereof may be 100% by mass. That is, all the organic solvents contained in the white ink may be the first organic solvents.

In a case where the white ink contains the first organic solvent, the content of the first organic solvent is preferably 30% by mass or less, more preferably 28% by mass or less, and still more preferably 26% by mass or less with respect to the total amount of the white ink.

In a case where the white ink contains the first organic solvent, the lower limit of the content of the first organic solvent is preferably 10% by mass or greater, more preferably 15% by mass or greater, and still more preferably 20% by mass or greater with respect to the total amount of the white ink.

From the viewpoint of further improving the lamination strength of the image recorded material, it is particularly preferable that the white ink contains an organic solvent having a boiling point of 120°C to 200°C (hereinafter, also referred to as "first organic solvent A"). The proportion of the first organic solvent A in the organic solvent contained in the white ink is preferably 50% by mass or greater, more preferably 90% by mass or greater, and still more preferably 95% by mass or greater. The proportion thereof may be 100% by mass. That is, all the organic solvents contained in the white ink may be the first organic solvents A.

It is preferable that the first organic solvent A includes at least one kind selected from the group consisting of alkylene glycol and alkylene glycol alkyl ether.

### (Pigment dispersing agent)

The white ink may contain a pigment dispersing agent.

In the present disclosure, the pigment dispersing agent has a function of dispersing the pigment.

In a case where the white ink contains the pigment dispersing agent, the pigment dispersing agent is adsorbed on the surface of the white pigment to cover at least a part of the surface of the white pigment, and thus the white pigment can be dispersed in water.

Further, in a case where a self-dispersing pigment that can be dispersed in water even in the absence of a pigment dispersing agent is used as the white pigment, the white ink may not contain a pigment dispersing agent.

The form of the pigment dispersing agent contained in the white ink is not particularly limited and may be any of a random polymer, a block polymer, or a graft polymer.

Further, the pigment dispersing agent contained in the white ink may be a polymer having a crosslinking structure.

Among the forms, it is preferable that the pigment dispersing agent contained in the white ink is a polymer having a crosslinking structure or a block polymer. It is considered that in a case where the pigment dispersing agent is a polymer having a crosslinking structure or a block polymer, the pigment dispersing agent is unlikely to be released from the surface of the white pigment, and thus the dispersion stability of the white pigment is high. As a result, in a case where the white ink reacts with the pretreatment liquid, since the white pigment is uniformly aggregated, the image is uniform, the organic solvent is likely to volatilize, and the lamination strength is further improved. Further, even in a case where the pretreatment liquid is not used, the proportion of the solvent in the white ink increases in the process in which water volatilizes after the white ink has landed on the impermeable base material, and the dispersion of the white pigment is likely to be destabilized. Here, in a case where the pigment dispersing agent is a polymer having a crosslinking structure or a block polymer, non-uniform aggregation of the white pigment is suppressed, the image is uniform, the organic solvent is likely to volatilize, and the lamination strength is further improved.

In the present disclosure, the polymer denotes a compound having a weight-average molecular weight of 1000 or greater.

In the present disclosure, the weight-average molecular weight (Mw) denotes a value measured by gel permeation chromatography (GPC). The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID × 15 cm), and tetrahydrofuran (THF) as an eluent. Further, the measurement is performed under measurement conditions of a sample concentration of 0.45% by mass, a flow rate of 0.35 ml/min, a sample injection volume of 10 µl, and a measurement temperature of 40°C using an RI detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

### - Polymer having crosslinking structure -

The polymer having a crosslinking structure is not particularly limited as long as the polymer is a polymer having at least one crosslinking structure in a molecule.

Whether or not the polymer contained in the ink has a crosslinking structure can be determined, for example, by the following method. First, the polymer is separated from the ink by a separation method such as solvent extraction. The presence or absence of the crosslinking structure can be comprehensively determined by analyzing the separated polymer using various analysis methods such as a nuclear magnetic resonance method (NMR), an infrared spectroscopy method (IR), and a thermal analysis method.

The polymer having a crosslinking structure (hereinafter, also referred to as "crosslinked polymer") is formed, for example, by crosslinking an uncrosslinked polymer (hereinafter, also referred to as "uncrosslinked polymer") with a crosslinking agent. It is preferable that the uncrosslinked polymer is a water-soluble polymer.

In the present disclosure, the term "water-soluble" indicates a property in which 1 g or greater of a substance is dissolved in 100 g of water at 25°C. As the term "water-soluble" property, a property in which 3 g or greater (more preferably 10 g or greater) of a substance is dissolved in 100 g of water at 25°C is preferable.

Even in a case where the uncrosslinked polymer is water-soluble, the crosslinked polymer is not necessarily water-soluble.

Examples of the uncrosslinked polymer include a vinyl resin, an acrylic resin, a urethane resin, and a polyester resin. Among these, an acrylic resin is preferable as the uncrosslinked polymer.

It is preferable that the uncrosslinked polymer is a polymer containing a functional group that can be crosslinked by a crosslinking agent. Examples of the crosslinkable functional group include a carboxy group or a salt thereof, an isocyanate group, and an epoxy group. Among these, from the viewpoint of improving the dispersibility of the pigment, a carboxy group or a salt thereof is preferable, and a carboxy group is particularly preferable as the crosslinkable functional group. That is, a polymer containing a carboxy group is preferable as the uncrosslinked polymer.

It is preferable that the uncrosslinked polymer is a copolymer having a structural unit derived from a monomer containing a carboxy group (hereinafter, referred to as "carboxy group-containing monomer"). The structural unit derived from a carboxy group-containing monomer contained in a copolymer may be used alone or two or more kinds thereof. The copolymer may be a random copolymer or a block copolymer, but is preferably a random copolymer.

Examples of the carboxy group-containing monomer include (meth)acrylic acid, β-carboxyethyl acrylate, fumaric acid, itaconic acid, maleic acid, and crotonic acid.

From the viewpoints of the crosslinking properties and the dispersibility, (meth)acrylic acid or β-carboxyethyl acrylate is preferable, and (meth)acrylic acid is more preferable as the carboxy group-containing monomer.

The content of the structural unit derived from a carboxy group-containing monomer is preferably in a range of 5% by mass to 40% by mass, more preferably in a range of 10% by mass to 35% by mass, and still more preferably in a range of 10% by mass to 30% by mass with respect to the total amount of the uncrosslinked polymer.

It is preferable that the uncrosslinked polymer has a structural unit derived from a hydrophobic monomer in addition to the structural unit derived from a carboxy group-containing monomer. The structural unit derived from a hydrophobic monomer contained in the copolymer may be used alone or two or more kinds thereof.

Examples of the hydrophobic monomer include (meth)acrylate containing an alkyl group having 1 to 20 carbon atoms, (meth)acrylate having an aromatic ring (such as benzyl (meth)acrylate or phenoxyethyl (meth)acrylate), styrene, and a styrene derivative.

The content of the structural unit derived from a hydrophobic monomer is preferably in a range of 60% by mass to 95% by mass, more preferably in a range of 65% by mass to 90% by mass, and still more preferably in a range of 70% by mass to 90% by mass with respect to the total amount of the uncrosslinked polymer.

The uncrosslinked polymer is preferably a random copolymer having a structural unit derived from a carboxy group-containing monomer and at least one of a structural unit derived from a (meth)acrylate containing an alkyl group having 1 to 20 carbon atoms or a structural unit derived from a (meth)acrylate having an aromatic ring, more preferably a random copolymer having a structural unit derived from (meth)acrylic acid and a structural unit derived from a (meth)acrylate having an aromatic ring, and still more preferably a copolymer having a structural unit derived from (meth)acrylic acid and a structural unit derived from benzyl (meth)acrylate.

The weight-average molecular weight (Mw) of the uncrosslinked polymer is not particularly limited, but is preferably in a range of 3,000 to 300,000, more preferably in a range of 5,000 to 200,000, and still more preferably in a range of 7,000 to 100,000 from the viewpoint of the dispersibility of the white pigment.

The preferable ranges of the weight-average molecular weight of the crosslinked polymer are the same as the preferable ranges of the weight-average molecular weight of the uncrosslinked polymer.

In the present disclosure, the weight-average molecular weight (Mw) is measured by gel permeation chromatography (GPC). The measurement according to GPC is performed by connecting three columns of TSKgeL Super HZM-H, TSKgeL Super HZ4000, and TSKgel Super HZ2000 (all trade names, manufactured by Tosoh Corporation) in series using HLC-8220GPC (manufactured by Tosoh Corporation) and tetrahydrofuran (THF) as an eluent. Further, the measurement is performed under conditions of a sample concentration of 0.45% by mass, a flow rate of 0.35 ml/min, a sample injection volume of 10 µl, and a measurement temperature of 40°C using a differential refractive index detector. Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

It is preferable that the crosslinking agent used in a case of crosslinking the uncrosslinked polymer is a compound having two or more reaction sites with the uncrosslinked polymer (for example, a polymer containing a carboxy group). The crosslinking agent may be used alone or in combination of two or more kinds thereof.

As a combination of the crosslinking agent and the uncrosslinked polymer, a combination of a compound containing two or more epoxy groups (that is, a bi- or higher functional epoxy compound) and a polymer containing a carboxy group is preferable. In this combination, a crosslinking structure is formed by the reaction between the epoxy group and the carboxy group. It is preferable that the crosslinking structure is formed by the crosslinking agent after the pigment is dispersed by the uncrosslinked polymer.

Examples of the bi- or higher functional epoxy compound include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable as the bi- or higher functional epoxy compound.

Commercially available products may be used as the crosslinking agent.

Examples of the commercially available products include Denacol EX-321, EX-821, EX-830, EX-850, and EX-851 (manufactured by Nagase ChemteX Corporation).

From the viewpoints of the crosslinking reaction rate and the dispersion stability after crosslinking, the molar ratio between a reaction site (for example, an epoxy group) in the crosslinking agent and a reaction site (for example, a carboxy group) in the uncrosslinked polymer is preferably in a range of 1:1.1 to 1:10, more preferably in a range of 1:1.1 to 1:5, and still more preferably in a range of 1: 1.1 to 1:3.

### - Block polymer -

The block polymer is also referred to as a block copolymer, and is a copolymer in which at least two polymers are bonded to each other in a molecule.

It is preferable that the block polymer has a structural unit derived from a hydrophobic monomer and a structural unit derived from a monomer containing an anionic group (hereinafter, referred to as "anionic group-containing monomer").

The structural unit derived from a hydrophobic monomer contained in the block polymer may be used alone or two or more kinds thereof. The structural unit derived from an anionic group-containing monomer contained in the block polymer may be used alone or two or more kinds thereof.

Examples of the structural unit derived from a hydrophobic monomer include an ethylenically unsaturated compound having an aromatic ring structure or an alicyclic structure and a (meth)acrylate containing an alkyl group having 1 to 20 carbon atoms.

The content of the structural unit derived from a hydrophobic monomer is preferably in a range of 35% by mass to 95% by mass, more preferably in a range of 50% by mass to 95% by mass, and still more preferably in a range of 70% by mass to 90% by mass with respect to the total amount of the block polymer.

From the viewpoint of the adsorptivity to the pigment, the hydrophobic monomer contains preferably an ethylenically unsaturated compound having an aromatic ring structure or an alicyclic structure, more preferably an ethylenically unsaturated compound having an alicyclic structure, and still more preferably an ethylenically unsaturated compound having an alicyclic structure having 6 or more carbon atoms.

The content of the structural unit derived from the ethylenically unsaturated compound having an aromatic ring structure or an alicyclic structure is preferably in a range of 10% by mass to 90% by mass, more preferably in a range of 20% by mass to 80% by mass, still more preferably in a range of 30% by mass to 70% by mass, and even still more preferably in a range of 30% by mass to 60% by mass with respect to the total amount of the block polymer.

It is also preferable that the structural unit derived from the hydrophobic monomer contains a (meth)acrylate containing an alkyl group having 1 to 20 carbon atoms. The alkyl group may be any of linear or branched.

Examples of the (meth)acrylate containing an alkyl group having 1 to 20 carbon atoms include methyl (meth)acrylate, ethyl (meth)acrylate, n-propyl (meth)acrylate, n-butyl (meth)acrylate, 2-ethylhexyl (meth)acrylate, and octyl (meth)acrylate.

The content of the structural unit derived from a (meth)acrylate containing an alkyl group having 1 to 20 carbon atoms is preferably in a range of 10% by mass to 90% by mass, more preferably in a range of 20% by mass to 80% by mass, still more preferably in a range of 30% by mass to 70% by mass, and particularly preferably in a range of 40% by mass to 60% by mass with respect to the total amount of the block polymer.

Examples of the anionic group in the structural unit derived from an anionic group-containing monomer include a carboxy group, a salt of the carboxy group, a sulfo group, a salt of the sulfo group, a phosphoric acid group, a salt of the phosphoric acid group, a phosphonic acid group, and a salt of the phosphonic acid group.

Examples of the counterion in a salt include an alkali metal ion such as a sodium ion, a potassium ion, or a lithium ion, an alkaline earth metal ion such as a calcium ion or a magnesium ion, and an ammonium ion.

Among these, a carboxy group or a salt of the carboxy group is preferable as the anionic group. Examples of the anionic group-containing monomer include (meth)acrylic acid, β-carboxyethyl acrylate, fumaric acid, itaconic acid, maleic acid, and crotonic acid. Among these, (meth)acrylic acid is preferable as the anionic group-containing monomer.

The content of the structural unit derived from the anionic group-containing monomer is preferably in a range of 1% by mass to 30% by mass, more preferably in a range of 2% by mass to 25% by mass, and still more preferably in a range of 3% by mass to 20% by mass with respect to the total amount of the block polymer.

Whether or not the polymer contained in the ink is a block polymer can be determined by, for example, the following method. First, the polymer is separated from the ink by a separation method such as solvent extraction. The physical properties such as the glass transition temperature are measured by performing analysis on the separated polymer using various analysis methods such as a nuclear magnetic resonance method (NMR), an infrared spectroscopy method (IR), and a thermal analysis method, and thus it is possible to comprehensively determine whether the polymer is a block polymer.

The weight-average molecular weight (Mw) of the block polymer is not particularly limited, but is preferably in a range of 3,000 to 100,000, more preferably in a range of 5,000 to 80,000, and still more preferably in a range of 10,000 to 60,000 from the viewpoint of the dispersibility of the pigment.

The mixing ratio between the white pigment and the pigment dispersing agent is preferably in a range of 1:0.02 to 1:2, more preferably in a range of 1:0.03 to 1:1.5, and still more preferably in a range of 1:0.04 to 1:1 in terms of the mass.

As a dispersion apparatus for dispersing the pigment, a known dispersion apparatus can be used, and examples thereof include a ball mill, a sand mill, a beads mill, a roll mill, a jet mill, a paint shaker, an attritor, an ultrasonic disperser, and a disper.

### (Resin particles)

From the viewpoint of improving the lamination strength of the image recorded material, it is preferable that the white ink contains resin particles.

That is, it is preferable that the white ink contains resin particles which are particles formed of a resin, in addition to the pigment dispersing agent.

In a case where the white ink contains resin particles, the surface roughness Ra of the white image to be obtained is likely to be adjusted to 0.10 µm or greater. The reason for this is considered to be that the viscosity of the white ink is greatly increased during drying of the ink in a case where the white ink contains resin particles.

Further, in a case where the recording method of the present disclosure includes a step of applying a pretreatment liquid described below, the viscosity of the white ink is increased by bringing an aggregating agent contained in the pretreatment liquid into contact with the resin particles contained in the white ink on the region of the impermeable base material to which the pretreatment liquid has been applied and destabilizing the dispersion of the resin particles. In this manner, the fixing property of the white ink to the impermeable base material is further improved, and as a result, the lamination strength of the image recorded material is further improved.

It is preferable that the resin constituting the resin particles is a water-insoluble polymer.

The term "water-insoluble" in the water-insoluble polymer denotes a property that the amount of the polymer to be dissolved in 100 g of distilled water at 25°C is less than 2 g.

The resin particles include preferably at least one of particles consisting of an acrylic resin (hereinafter, referred to as "acrylic resin particles") or particles consisting of a urethane resin (hereinafter, also referred to as "urethane resin particles") and preferably acrylic resin particles.

It is preferable that the resin particles are self-dispersing resin particles.

Examples of the self-dispersing resin particles include resin particles described in paragraphs 0062 to 0076 of JP2016-188345A and paragraphs 0109 to 0140 of WO2013/180074A.

It is preferable that the resin in the resin particles is an acrylic resin having a structural unit derived from a (meth)acrylate having an aromatic ring structure or an alicyclic structure, a structural unit derived from (meth)acrylic acid, and a structural unit derived from alkyl (meth)acrylate containing an alkyl group having 1 to 4 carbon atoms.

As the (meth)acrylate having an alicyclic structure, alkyl (meth)acrylate containing a cycloalkyl group having 3 to 10 carbon atoms is preferable, at least one selected from the group consisting of cyclohexyl (meth)acrylate, isobornyl (meth)acrylate, adamantyl (meth)acrylate, and dicyclopentanyl (meth)acrylate is preferable, and at least one selected from the group consisting of isobornyl (meth)acrylate, adamantyl (meth)acrylate, and dicyclopentanyl (meth)acrylate is more preferable.

It is preferable that the (meth)acrylate having an aromatic ring structure is phenoxyethyl (meth)acrylate or benzyl (meth)acrylate.

Examples of the resin in the resin particles include a phenoxyethyl acrylate/methyl methacrylate/acrylic acid copolymer (50/45/5), a phenoxyethyl acrylate/benzyl methacrylate/isobutyl methacrylate/methacrylic acid copolymer (30/35/29/6), a phenoxyethyl methacrylate/isobutyl methacrylate/methacrylic acid copolymer (50/44/6), a phenoxyethyl acrylate/methyl methacrylate/ethyl acrylate/acrylic acid copolymer (30/55/10/5), a benzyl methacrylate/isobutyl methacrylate/methacrylic acid copolymer (35/59/6), a styrene/phenoxyethyl acrylate/methyl methacrylate/acrylic acid copolymer (10/50/35/5), a benzyl acrylate/methyl methacrylate/acrylic acid copolymer (55/40/5), a phenoxyethyl methacrylate/benzyl acrylate/methacrylic acid copolymer (45/47/8), a styrene/phenoxyethyl acrylate/butyl methacrylate/acrylic acid copolymer (5/48/40/7), a benzyl methacrylate/isobutyl methacrylate/cyclohexyl methacrylate/methacrylic acid copolymer (35/30/30/5), a phenoxyethyl acrylate/methyl methacrylate/butyl acrylate/methacrylic acid copolymer (12/50/30/8), a benzyl acrylate/isobutyl methacrylate/acrylic acid copolymer (93/2/5), a methyl methacrylate/methoxyethyl acrylate/benzyl methacrylate/acrylic acid copolymer (44/15/35/6), a styrene/butyl acrylate/acrylic acid copolymer (62/35/3), a methyl methacrylate/phenoxyethyl acrylate/acrylic acid copolymer (45/51/4), a methyl methacrylate/isobornyl methacrylate/methacrylic acid copolymer (20/72/8), a methyl methacrylate/isobornyl methacrylate/methacrylic acid copolymer (40/52/8), a methyl methacrylate/isobornyl methacrylate/methacrylic acid copolymer (48/42/10), a methyl methacrylate/isobornyl methacrylate/dicyclopentanyl methacrylate/methacrylic acid copolymer (20/62/10/8), a methyl methacrylate/dicyclopentanyl methacrylate/methacrylic acid copolymer (20/72/8), and a methyl methacrylate/isobornyl methacrylate/methacrylic acid copolymer (70/20/10). In addition, the values in parentheses represent the mass ratios of the structural units derived from monomers. Further, the (meth)acrylic acid constituting the resin may be partially or entirely a salt.

The acid value of the resin in the resin particles is preferably 25 mgKOH/g to 100 mgKOH/g, more preferably 30 mgKOH/g to 90 mgKOH/g, and still more preferably 35 mgKOH/g to 80 mgKOH/g.

The weight-average molecular weight of the resin in the resin particles is preferably in a range of 1,000 to 300,000, more preferably in a range of 2,000 to 200,000, and still more preferably in a range of 5,000 to 100,000.

From the viewpoint of the jetting stability, the average particle diameter of the resin particles is preferably in a range of 1 nm to 200 nm, more preferably in a range of 3 nm to 200 nm, and still more preferably in a range of 5 nm to 50 nm.

Here, the average particle diameter of the resin particles is determined by measuring the volume average particle diameter with a particle size distribution measuring device, for example, "NANOTRAC UPA-EX150" (product name, manufactured by Nikkiso Co., Ltd.) using a dynamic light scattering method.

In a case where the white ink contains resin particles, the content of the resin particles is preferably in a range of 0.1% by mass to 15% by mass, more preferably in a range of 0.5% by mass to 10% by mass, and still more preferably in a range of 2% by mass to 10% by mass with respect to the total amount of the white ink.

### (Other components)

The white ink may contain other components as necessary.

Examples of other components include a surfactant, a co-sensitizer, an ultraviolet absorbing agent, an antioxidant, a fading inhibitor, a conductive salt, and a basic compound.

### (Physical properties)

From the viewpoint of improving the jetting stability, the pH of the white ink is preferably in a range of 7 to 10 and more preferably in a range of 7.5 to 9.5. The pH is measured at 25°C using a pH meter, for example, a pH meter (model number "HM-31", manufactured by DKK-Toa Corporation).

The viscosity of the white ink is preferably in a range of 0.5 mPa·s to 30 mPa·s, more preferably in a range of 2 mPa·s to 20 mPa·s, preferably in a range of 2 mPa·s to 15 mPa·s, and even still more preferably in a range of 3 mPa·s to 10 mPa·s. The viscosity is measured at 25°C using a viscometer, for example, a TV-22 type viscometer (manufactured by Toki Sangyo Co., Ltd.).

The surface tension of the white ink is preferably 60 mN/m or less, more preferably in a range of 20 mN/m to 50 mN/m, and still more preferably in a range of 30 mN/m to 45 mN/m. The surface tension is measured at 25°C by a plate method using a surface tension meter, for example, an automatic surface tension meter (product name, "CBVP-Z", manufactured by Kyowa Interface Science Co., Ltd.).

### <Step of preparing colored ink>

The recording method of the present disclosure includes a step of preparing a colored ink containing water and a color pigment.

The colored ink prepared in the present step may be used alone or in combination of two or more kinds thereof. In order to record a polychromic image, it is preferable that the colored ink prepared in the present step is used in combination of two or more kinds thereof.

Hereinafter, the colored ink prepared in the present step will be described.

### (Water)

The colored ink contains water.

The content of water is preferably 30% by mass or greater, more preferably 40% by mass or greater, and still more preferably 50% by mass or greater with respect to the total amount of the colored ink.

The upper limit of the content of water depends on the amount of other components, but is preferably 90% by mass or less, more preferably 80% by mass or less, and still more preferably 70% by mass or less with respect to the total amount of the colored ink.

### (Color pigment)

The colored ink contains a color pigment.

The color pigment may be a chromatic pigment, a black pigment, or a combination of one or more kinds of chromatic pigments and one or more kinds of black pigments.

The chromatic pigment may be a pigment exhibiting a chromatic color, and the kind thereof is not particularly limited.

The chromatic pigment is not particularly limited, and examples thereof include a cyan pigment, a magenta pigment, a yellow pigment, a blue pigment, a red pigment, a green pigment, an orange pigment, and a violet pigment.

Specific examples of the chromatic pigment include organic pigments such as an azo pigment, a disazo pigment, a condensed disazo pigment, a phthalocyanine pigment, a quinacridone pigment, a quinacridone quinone pigment, an anthraquinone pigment, an aminoanthraquinone pigment, an anthanthrone pigment, a dioxazine pigment, an indigo pigment, a thioindigo pigment, a perinone pigment, a perylene pigment, an isoindoline pigment, an isoindolinone pigment, an isoviolanthrone pigment, a benzimidazolone pigment, an indanthrone pigment, a triarylcarbonium pigment, and a diketopyrrolopyrrole pigment.

More specific examples of the chromatic pigment include a perylene pigment such as C.I. Pigment Red 190, C.I. Pigment Red 224, or C.I. Pigment Violet 29; a perinone pigment such as C.I. Pigment Orange 43 or C.I. Pigment Red 194; a quinacridone pigment such as C.I. Pigment Violet 19, C.I. Pigment Violet 42, C.I. Pigment Red 122, C.I. Pigment Red 192, C.I. Pigment Red 202, C.I. Pigment Red 207, or C.I. Pigment Red 209; a quinacridone quinone pigment such as C.I. Pigment Red 206, C.I. Pigment Orange 48, or C.I. Pigment Orange 49; an anthraquinone pigment such as C.I. Pigment Yellow 147; an anthanthrone pigment such as C.I. Pigment Red 168; a benzimidazolone pigment such as C.I. Pigment Brown 25, C.I. Pigment Violet 32, C.I. Pigment Orange 36, C.I. Pigment Yellow 120, C.I. Pigment Yellow 180, C.I. Pigment Yellow 181, C.I. Pigment Orange 62, or C.I. Pigment Red 185; a condensed disazo pigment such as C.I. Pigment Yellow 93, C.I. Pigment Yellow 94, C.I. Pigment Yellow 95, C.I. Pigment Yellow 128, C.I. Pigment Yellow 166, C.I. Pigment Orange 34, C.I. Pigment Orange 13, C.I. Pigment Orange 31, C.I. Pigment Red 144, C.I. Pigment Red 166, C.I. Pigment Red 220, C.I. Pigment Red 221, C.I. Pigment Red 242, Pigment Red 248, C.I. Pigment Red 262, or C.I. Pigment Brown 23; a disazo pigment such as C.I. Pigment Yellow 13, C.I. Pigment Yellow 83, or C.I. Pigment Yellow 188; an azo pigment such as C.I. Pigment Red 187, C.I. Pigment Red 170, C.I. Pigment Yellow 74, C.I. Pigment Yellow 150, C.I. Pigment Red 48, C.I. Pigment Red 53, C.I. Pigment Orange 64, or C.I. Pigment Red 247; an indanthrone pigment such as C.I. Pigment Blue 60; a phthalocyanine pigment such as C.I. Pigment Green 7, C.I. Pigment Green 36, C.I. Pigment Green 37, C.I. Pigment Green 58, C.I. Pigment Blue 16, C.I. Pigment Blue 75, or C.I. Pigment Blue 15; a triarylcarbonium pigment such as C.I. Pigment Blue 56 or C.I. Pigment Blue 61; a dioxazine pigment such as C.I. Pigment Violet 23 or C.I. Pigment Violet 37; an aminoanthraquinone pigment such as C.I. Pigment Red 177; a diketopyrrolopyrrole pigment such as C.I. Pigment Red 254, C.I. Pigment Red 255, C.I. Pigment Red 264, C.I. Pigment Red 272, C.I. Pigment Orange 71, or C.I. Pigment Orange 73; a thioindigo pigment such as C.I. Pigment Red 88; an isoindoline pigment such as C.I. Pigment Yellow 139 or Pigment Orange 66; an isoindolinone pigment such as Pigment Yellow 109 or C.I. Pigment Orange 61; a pyranthrone pigment such as C.I. Pigment Orange 40 or C.I. Pigment Red 216; and an isoviolanthrone pigment such as C.I. Pigment Violet 31.

The black pigment may be a pigment exhibiting a black color, and the kind thereof is not particularly limited.

Examples of the black pigment include carbon black and titanium black.

The average particle diameter of the color pigment is preferably in a range of 10 nm to 200 nm, more preferably in a range of 10 nm to 150 nm, and still more preferably in a range of 10 nm to 110 nm.

A method of measuring the average particle diameter of the color pigment is the same as the method of measuring the average particle diameter of the white pigment described above.

From the viewpoints of the image density and the jettability, the content of the color pigment is preferably in a range of 1% by mass to 15% by mass and more preferably in a range of 2% by mass to 10% by mass with respect to the total mass of the colored ink.

### (Organic solvent)

From the viewpoint of the jettability, it is preferable that the colored ink contain an organic solvent.

The preferable aspects of the organic solvent that can be contained in the colored ink (that is, the preferable kind, the preferable content, and the like) are the same as the preferable aspects of the organic solvent that can be contained in the white ink.

### (Pigment dispersing agent)

The colored ink may contain a pigment dispersing agent.

The preferable aspects of the pigment dispersing agent that can be contained in the colored ink are the same as the preferable aspects of the pigment dispersing agent that can be contained in the white ink.

### (Resin particles)

The colored ink may contain resin particles.

The preferable aspects of the resin particles that can be contained in the colored ink are the same as the preferable aspects of the resin particles that can be contained in the white ink.

### (Other components)

The colored ink may contain other components as necessary.

The preferable aspects of the other components that can be contained in the colored ink are the same as the preferable aspects of the other components that can be contained in the white ink.

### (Physical properties)

The preferable aspects of the physical properties (that is, the pH, the viscosity, and the surface tension) of the colored ink are the same as the preferable aspects of the physical properties of the white ink.

### <Step of obtaining colored image>

The recording method of the present disclosure includes a step of applying the colored ink onto an impermeable base material using an ink jet method to obtain a colored image.

### (Impermeable base material)

In the present disclosure, the impermeability in the impermeable base material denotes a property that the water absorption rate in 24 hours which is measured in conformity with ASTM D570-98 (2018) is 2.5% or less. Here, the unit "%" of the water absorption rate is on a mass basis. The water absorption rate is preferably 1.0% or less and more preferably 0.5% or less.

The impermeable base material may be an impermeable base material having transparency.

Here, the expression of "having transparency" denotes that the transmittance of visible light having a wavelength of 400 nm to 700 nm is 80% or greater (preferably 90% or greater).

In a case where the impermeable base material is an impermeable base material having transparency, the colored image is easily visually recognized through the impermeable base material from the image non-recorded surface side of the impermeable base material.

Examples of the material of the impermeable base material include glass, a metal (such as aluminum, zinc, or copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, or an acrylic resin).

It is preferable that the material of the impermeable base material is a resin.

Examples of the material of the impermeable base material are as described above, but polypropylene, polyethylene, polyethylene terephthalate, nylon, an acrylic resin, or polyvinyl chloride is preferable from the viewpoint of versatility.

As the shape of the impermeable base material, a sheet-like (film-like) or a plate-like impermeable base material is preferable. Examples of the impermeable base material having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the impermeable base material made of a resin include a resin sheet (resin film), and more specific examples thereof include a flexible packaging material for packaging food or the like and a panel for guiding the floor of a mass retailer.

Examples of the impermeable base material include a textile (woven fabric) or non-woven fabric formed of impermeable fibers in addition to a sheet-like (film-like) or plate-like impermeable base material.

Further, the thickness of the impermeable base material is preferably in a range of 0.1 µm to 1,000 µm, more preferably in a range of 0.1 µm to 800 µm, and still more preferably in a range of 1 µm to 500 µm.

The impermeable base material may be subjected to a hydrophilization treatment.

Examples of the hydrophilization treatment include a corona treatment, a plasma treatment, a flame treatment, a heat treatment, an abrasion treatment, a light irradiation treatment (such as a UV treatment), and a flame treatment, but the hydrophilization treatment is not limited thereto.

The corona treatment can be performed using, for example, Corona Master (product name, "PS-10S", manufactured by Shinko Electric & Instrumentation Co., Ltd.). The conditions for the corona treatment may be appropriately selected according to the kind of the impermeable base material and the like.

The recording method of the present disclosure may include a preheating step of preheating the impermeable base material to which the colored ink is applied, before the step of obtaining a colored image.

The heating temperature in the preheating step may be appropriately set according to the kind of the impermeable base material, but the temperature of the impermeable base material is set to be preferably in a range of 30°C to 70°C and more preferably in a range of 30°C to 60°C.

### (Method of applying colored ink)

In the step of obtaining a colored image, the colored ink is applied onto the impermeable base material using an inkjet method to obtain a colored image.

The colored image to be obtained is an image covered with a white image described below.

In consideration of this point, a pattern image of characters or figures is preferable as the colored image.

The application of the colored ink using the ink jet method is performed by jetting the colored ink from a nozzle of an ink jet head.

A method of jetting the colored ink is not particularly limited, and any of known methods such as an electric charge control method of jetting an ink using electrostatic attraction force; a drop-on-demand method (pressure pulse method) using a vibration pressure of a piezoelectric element; an acoustic ink jet method of jetting an ink using a radiation pressure by converting an electric signal into an acoustic beam and irradiating the ink with the acoustic beam; and a thermal ink jet (bubble jet (registered trademark)) method of heating an ink to form air bubbles and utilizing the generated pressure may be used.

As an ink jet method, particularly, an ink jet method, described in JP1979-59936A (JP-S54-59936A), of jetting an ink from a nozzle using an action force caused by a rapid change in volume of the ink after being subjected to an action of thermal energy can be effectively used. Further, as an ink jet method, the method described in paragraphs 0093 to 0105 of JP2003-306623A can also be employed.

Examples of the system of the ink jet head include a shuttle system of performing recording while scanning a short serial head in the width direction of a recorded medium and a line system of using a line head in which recording elements are aligned in correspondence with the entire area of one side of a recorded medium.

In the line system, image recording can be performed on the entire surface of the recorded medium by scanning the recorded medium in a direction intersecting the direction in which the recording elements are aligned. In the line system, a transport system such as a carriage that scans a short head in the shuttle system is not necessary. Further, in the line system, since movement of a carriage and complicated scanning control between the short head and the recorded medium are not necessary as compared with the shuttle system, only the recorded medium moves. Therefore, according to the line system, image recording at a higher speed than that of the shuttle system can be realized.

It is preferable that the application of the colored ink is performed using an inkjet head having a resolution of 300 dpi or greater (more preferably 600 dpi or greater and still more preferably 800 dpi or greater). Here, dpi stands for dot per inch, and 1 inch is 2.54 cm.

From the viewpoint of obtaining a high-definition image, the liquid droplet amount of the colored ink to be jetted from the nozzle of the ink jet head is preferably in a range of 1 picoliter (pL) to 10 pL and more preferably in a range of 1.5 pL to 6 pL. Further, from the viewpoints of enhancing the colored image unevenness and connection of continuous gradations, it is also effective that the ink is jetted by combining different liquid droplet amounts.

### (Heating and drying)

The step of obtaining a colored image includes applying the colored ink onto the impermeable base material using an inkjet method, and heating and drying the colored ink applied onto the impermeable base material to obtain the colored image.

A method of heating and drying the colored ink is not particularly limited, and examples thereof include infrared (IR) drying, hot air drying, and heating and drying using a heating device (for example, a heater, a hot plate, a heating furnace, or the like).

The method of heating and drying the colored ink may be a method of combining two or more of the above-described methods.

The heating and drying can be performed by heating the colored ink from at least one of the image recorded surface side or the image non-recorded surface side of the impermeable base material.

It is preferable that the heating and drying are performed under a condition that the residual solvent amount in the applied colored ink is 0.10 g/m² or less.

In this case, the surface roughness Ra of the white image recorded on the colored image is easily adjusted to be in a range of 0.10 µm to 0.40 µm.

It is more preferable that the heating and drying are performed within 70 seconds from the start of the heating and drying under a condition that the residual solvent amount in the colored ink is 0.10 g/m² or less.

In the present disclosure, the residual solvent amount in the ink applied onto the impermeable base material is confirmed by gas chromatography.

The drying temperature in the heating and drying of the colored ink (that is, the temperature of the colored ink) is preferably 35°C or higher, more preferably 40°C or higher, still more preferably 50°C or higher, and even still more preferably 60°C or higher.

The upper limit of the heating temperature is not particularly limited, but is preferably 100°C and more preferably 90°C.

The drying time in the heating and drying of the colored ink is not particularly limited, but is preferably in a range of 1 second to 180 seconds, more preferably in a range of 1 second to 120 seconds, and still more preferably in a range of 1 second to 60 seconds.

In a case where the heating and drying are performed in the step of obtaining a colored image, it is preferable that the colored ink applied onto the impermeable base material is heated and dried under a condition that the time taken from completion of the application of the colored ink to start of the heating and drying of the colored ink is 10 seconds or shorter.

The time taken from completion of the application of the colored ink to start of the heating and drying of the colored ink is preferably 10 seconds or shorter and more preferably 5 seconds or shorter.

### <Step of obtaining white image>

The recording method of the present disclosure includes a step of applying the white ink onto the colored image using an ink jet method to obtain a white image having a surface roughness Ra of 0.10 µm to 0.40 µm.

The white image obtained in the present step is an image that covers the colored image.

The white image may be formed on the impermeable base material to straddle the colored image and a region where the colored image is not formed.

As an example of the recording method of the present disclosure, a pattern image such as a character image or a figure image is recorded as a colored image using a base material having transparency serving as an impermeable base material, and a white image is recorded as a solid image to cover the entire region where the pattern image has been recorded (that is, the entirety of the pattern image and the region where the image is not formed).

In this case, the pattern image as the colored image is visually recognized through the base material from the image non-recorded surface side of the base material.

In the present step, the surface roughness Ra of the white image on the colored image (that is, the arithmetic average roughness Ra of the surface of the white image on the colored image) is in a range of 0.10 µm to 0.40 µm.

In this manner, as described above, the lamination strength in a case where the base material for lamination is laminated on the white image is improved.

From the viewpoint of further improving the lamination strength, the surface roughness Ra of the white image on the colored image is preferably in a range of 0.15 µm to 0.30 µm.

In the present step, the amount of the white pigment in the white image to be obtained is preferably 0.7 g/m² or greater. In this manner, the surface roughness Ra of the white image to be recorded on the colored image is likely to be adjusted to 0.10 µm or greater, and the lamination strength is likely to be further improved.

The amount of the white pigment in the white image can be adjusted by the amount of the white ink to be applied.

The upper limit of the amount of the white pigment in the white image is not particularly limited, and the upper limit thereof may be, for example, 3.0 g/m² or 2.0 g/m².

A method of jetting the white ink using an ink jet method is not particularly limited, and examples thereof include the same methods as the methods of jetting the colored ink using an inkjet method described above.

The preferable ranges of the resolution and the liquid droplet amount of the white ink are the same as the preferable ranges of the resolution and the liquid droplet amount of the colored ink described above.

### (Heating and drying)

The step of obtaining the white image includes applying the white ink onto the colored image using an ink jet method, and heating and drying the white ink applied onto the colored image to obtain a white image.

A method of heating and drying the white ink which can be performed in the step of obtaining the white image is not particularly limited, and examples thereof include the same methods as the methods of heating and drying the colored ink which can be performed in the step of obtaining the colored image.

It is preferable that the heating and drying are performed under a condition that the residual solvent amount in the applied white ink is 0.20 g/m² or less.

In this case, the surface roughness Ra of the white image recorded on the colored image is easily adjusted to be in a range of 0.10 µm to 0.40 µm.

From the viewpoint of more effectively obtaining the above-described effects, it is more preferable that the heating and drying are performed under a condition that the residual solvent amount in the applied white ink is 0.15 g/m² or less (more preferably 0.10 g/m² or less).

It is still more preferable that the heating and drying are performed within 70 seconds from the start of the heating and drying under a condition that the residual solvent amount in the white ink is 0.20 g/m² or less (more preferably 0.15 g/m² or less and still more preferably 0.10 g/m² or less).

In the present disclosure, the residual solvent amount in the white ink applied onto the colored image denotes the total amount (g/m²) of water and the organic solvent in the white ink applied onto the colored image.

In the present disclosure, the amount of the organic solvent in the residual solvent amount in the white ink applied onto the colored image is confirmed by gas chromatography.

In the present disclosure, the amount of water in the residual solvent amount in the white ink applied onto the colored image is confirmed by a Karl Fischer method. Specifically, the amount thereof is confirmed using a Karl Fischer moisture meter (for example, a trace moisture measuring device, model CA-310, manufactured by Nittoseiko Analytech Co., Ltd.).

The drying temperature in the heating and drying of the white ink (that is, the temperature of the white ink) is preferably 35°C or higher, more preferably 40°C or higher, still more preferably 50°C or higher, and even still more preferably 60°C or higher.

The upper limit of the heating temperature is not particularly limited, but is preferably 100°C and more preferably 90°C.

The drying time in the heating and drying of the white ink is not particularly limited, but is preferably in a range of 1 second to 180 seconds, more preferably in a range of 1 second to 120 seconds, and still more preferably in a range of 1 second to 60 seconds.

In a case where heating and drying are performed in the step of obtaining the white image, it is preferable that the white ink applied onto the colored image is heated and dried under a condition that the time taken from completion of the application of the white ink to the start of the heating and drying of the white ink is 10 seconds or shorter.

The time taken from the completion of the application of the white ink to the start of the heating and drying of the white ink is preferably 10 seconds or shorter and more preferably 5 seconds or shorter.

### <Step of preparing pretreatment liquid and step of applying pretreatment liquid>

It is preferable that the recording method of the present disclosure further includes a step of preparing a pretreatment liquid containing water and an aggregating agent, and a step of applying the pretreatment liquid onto the impermeable base material, which is provided before the step of obtaining the colored image.

In this case, it is preferable that the step of obtaining the colored image is a step of obtaining a colored image by applying the colored ink onto a region of the impermeable base material where the pretreatment liquid has been applied.

According to a preferable aspect of using the pretreatment liquid, the components in the colored ink and the white ink are aggregated on the impermeable base material by the aggregating agent in the pretreatment liquid. Particularly, in a case where the colored ink and/or the white ink contains a pigment dispersing agent and resin particles, the aggregation effect due to the aggregating agent is high.

As a result, the adhesiveness between the impermeable base material and the colored image is improved, the adhesiveness between the colored image and the white image is also improved, and thus the lamination strength described above is further improved.

### (Water)

The pretreatment liquid contains water.

The content of water is preferably 30% by mass or greater, more preferably 40% by mass or greater, and still more preferably 50% by mass or greater with respect to the total amount of the pretreatment liquid.

The upper limit of the content of water depends on the amount of other components, but is preferably 90% by mass or less, more preferably 80% by mass or less, and still more preferably 70% by mass or less with respect to the total amount of the pretreatment liquid.

### (Aggregating agent)

The pretreatment liquid contains an aggregating agent.

The aggregating agent is not particularly limited as long as the aggregating agent is a component that aggregates the components in the white ink and the colored ink.

The aggregating agent contains preferably at least one selected from the group consisting of a polyvalent metal compound, an organic acid, a metal complex, and a cationic polymer and more preferably an organic acid.

### - Polyvalent metal compound -

Examples of the polyvalent metal compound include salts of alkaline earth metals of a group 2 (such as magnesium and calcium) in the periodic table, transition metals of a group 3 (such as lanthanum) in the periodic table, metals of a group 13 (such as aluminum) in the periodic table, and lanthanides (such as neodymium).

As salts of these metals, salts of organic acids, a nitrate, a chloride, and a thiocyanate described below are preferable.

Among these, preferred examples of the polyvalent metal compound include a calcium salt or magnesium salt of an organic acid (such as formic acid, acetic acid, or a benzoic acid), a calcium salt or magnesium salt of nitric acid, calcium chloride, magnesium chloride, and a calcium salt or magnesium salt of thiocyanic acid.

Further, it is preferable that at least a part of the polyvalent metal compound is dissociated into polyvalent metal ions and counterions in the pretreatment liquid.

### - Organic acid -

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, a phosphoric acid group or a carboxy group is preferable, and a carboxy group is more preferable as the acidic group.

Further, it is preferable that at least a part of the acidic group is dissociated in the pretreatment liquid.

Examples of the organic compound containing a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of the aggregation rate of the ink, as the organic compound containing a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable, and malonic acid, malic acid, tartaric acid, succinic acid, glutaric acid, pimelic acid, adipic acid, or citric acid is more preferable.

It is preferable that the organic acid has a low pKa (for example, 1.0 to 5.0). In this manner, the surface charge of particles such as resin particles or the pigment stably dispersed in the ink by a weakly acidic functional group such as a carboxy group can be reduced by bringing the ink into contact with an organic acid having a lower pKa to degrade the dispersion stability.

It is preferable that the organic acid has a low pKa, high solubility in water, and a valence of divalent or higher. Further, it is more preferable that the organic acid has a high buffer capacity in a pH region with a pKa lower than the pKa of a functional group (for example, a carboxy group) that stably disperses particles in the ink.

### - Metal complex -

It is preferable that the metal complex contains at least one selected from the group consisting of zirconium, aluminum, and titanium as a metal element.

As the metal complex, a metal complex including at least one selected from the group consisting of acetate, acetylacetonate, methylacetoacetate, ethylacetoacetate, octylene glycolate, butoxyacetylacetonate, lactate, a lactate ammonium salt, and triethanol aminate as a ligand is preferable.

The metal complex may be a commercially available product. Further, various organic ligands, particularly various multidentate ligands that are capable of forming metal chelate catalysts are commercially available. Accordingly, the metal complex may be a metal complex prepared by combining a commercially available organic ligand with a metal.

Examples of the metal complex include zirconium tetraacetyl acetonate (for example, "ORGATIX ZC-150", manufactured by Matsumoto Fine Chemical Co., Ltd.), zirconium monoacetyl acetonate (for example, "ORGATIX ZC-540", manufactured by Matsumoto Fine Chemical Co., Ltd.), zirconium bisacetyl acetonate (for example, "ORGATIX ZC-550", manufactured by Matsumoto Fine Chemical Co., Ltd.), zirconium monoethyl acetoacetate (for example, "ORGATIX ZC-560", manufactured by Matsumoto Fine Chemical Co., Ltd.), zirconium acetate (for example, "ORGATIX ZC-115", manufactured by Matsumoto Fine Chemical Co., Ltd.), titanium diisopropoxy bis(acetylacetonate) (for example, "ORGATIX TC-100", manufactured by Matsumoto Fine Chemical Co., Ltd.), titanium tetraacetyl acetonate (for example, "ORGATIX TC-401", manufactured by Matsumoto Fine Chemical Co., Ltd.), titanium dioctyloxy bis(octylene glycolate) (for example, "ORGATIX TC-200", manufactured by Matsumoto Fine Chemical Co., Ltd.), titanium diisopropoxy bis(ethylacetoacetate) (for example, "ORGATIX TC-750", manufactured by Matsumoto Fine Chemical Co., Ltd.), zirconium tetraacetyl acetonate (for example, "ORGATIX ZC-700", manufactured by Matsumoto Fine Chemical Co., Ltd.), zirconium tributoxy monoacetyl acetonate (for example, "ORGATIX ZC-540", manufactured by Matsumoto Fine Chemical Co., Ltd.), zirconium monobutoxy acetyl acetonate bis(ethylacetoacetate) (for example, "ORGATIX ZC-570", manufactured by Matsumoto Fine Chemical Co., Ltd.), zirconium dibutoxy bis(ethylacetoacetate) (for example, "ORGATIX ZC-580", manufactured by Matsumoto Fine Chemical Co., Ltd.), aluminum trisacetyl acetonate (for example, "ORGATIX AL-80", manufactured by Matsumoto Fine Chemical Co., Ltd.), titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.).

Among these, titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.) are preferable as the metal complex.

### - Cationic polymer -

In addition, the pretreatment liquid may be in a form containing one or two or more kinds of cationic polymers as an aggregating component. It is preferable that the cationic polymer is a homopolymer of a cationic monomer containing a primary to tertiary amino group or a quaternary ammonium base, or a copolymer or a condensed polymer of a cationic monomer and a non-cationic monomer. The cationic polymer may be used in any form of a water-soluble polymer or water-dispersible latex particles.

Examples of the cationic polymer include a polyvinylpyridine salt, polyalkylaminoethyl acrylate, polyalkylaminoethyl methacrylate, polyvinylimidazole, polyethyleneimine, polybiguanide, polyguanide, polyallylamine, and derivatives thereof.

From the viewpoint of the viscosity of the pretreatment liquid, it is preferable that the weight-average molecular weight of the cationic polymer is small. In a case where the pretreatment liquid is applied to a recording medium by an ink jet recording method, the weight-average molecular weight thereof is preferably in a range of 1,000 to 500,000, more preferably in a range of 1,500 to 200,000, and still more preferably in a range of 2,000 to 100,000. It is advantageous that the weight-average molecular weight thereof is 1,000 or greater from the viewpoint of aggregation rate. It is advantageous that the weight-average molecular weight thereof is 500,000 or less from the viewpoint of jetting reliability. However, in a case where the pretreatment liquid is applied to a recording medium by a method other than the ink jet recording method, the weight-average molecular weight thereof is not limited thereto.

The pretreatment liquid may contain only one or two or more kinds of aggregating agents.

The content of the aggregating agent is preferably in a range of 0.1% by mass to 40% by mass, more preferably in a range of 0.1% by mass to 30% by mass, still more preferably in a range of 1% by mass to 20% by mass, and particularly preferably in a range of 1% by mass to 10% by mass with respect to the total amount of the pretreatment liquid.

### (Organic solvent)

The pretreatment liquid may contain an organic solvent.

Examples of the organic solvent which can be contained in the pretreatment liquid include the above-described organic solvents which can be contained in the white ink.

The content of the organic solvent is preferably 15% by mass or less and more preferably 10% by mass or less with respect to the total amount of the pretreatment liquid.

The content of the organic solvent may be 0% by mass with respect to the total amount of the pretreatment liquid. That is, the pretreatment liquid may not contain an organic solvent.

### (Other components)

The pretreatment liquid may contain other components as necessary.

Examples of the other components that can be contained in the pretreatment liquid include resin particles, a surfactant, a solid wetting agent, colloidal silica, an inorganic salt, a fading inhibitor, an emulsification stabilizer, a penetration enhancer, an ultraviolet absorbing agent, a preservative, a fungicide, a pH adjuster, a viscosity adjuster, a rust inhibitor, a chelating agent, and a water-soluble polymer compound (for example, water-soluble polymer compounds described in paragraphs 0026 to 0080 of JP2013-001854A).

### (Physical properties)

The pH of the pretreatment liquid is preferably 0.1 to 4.5, more preferably 0.2 to 4.0, from the viewpoint of the aggregation rate of the ink. The pH is measured at 25°C using a pH meter, for example, a pH meter (model number "HM-31", manufactured by DKK-Toa Corporation).

From the viewpoint of the aggregation rate of the ink, the viscosity of the pretreatment liquid is preferably in a range of 0.5 mPa·s to 10 mPa·s and more preferably in a range of 1 mPa s to 5 mPa s. The viscosity is a value measured at 25°C using a viscometer. The viscosity is measured at 25°C using a viscometer, for example, a TV-22 type viscometer (manufactured by Toki Sangyo Co., Ltd.).

The surface tension of the pretreatment liquid is preferably 60 mN/m or less, more preferably in a range of 20 mN/m to 50 mN/m, and still more preferably in a range of 30 mN/m to 45 mN/m. The surface tension is a value measured at a temperature of 25°C. The surface tension is measured at 25°C by a plate method using a surface tension meter, for example, an automatic surface tension meter (product name, "CBVP-Z", manufactured by Kyowa Interface Science Co., Ltd.).

### (Method of applying pretreatment liquid)

A method of applying the pretreatment liquid is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, and a reverse roll coater.

### (Heating and drying)

It is preferable that the step of applying the pretreatment liquid includes applying the pretreatment liquid onto the impermeable base material, and heating and drying the pretreatment liquid applied onto the impermeable base material under a condition that a residual moisture content is 0.03 g/m² or less.

A method of heating and drying the pretreatment liquid that can be performed in the step of applying the pretreatment liquid is not particularly limited, and examples thereof include the same methods as the methods of heating and drying the colored ink that can be performed in the step of obtaining the colored image.

It is preferable that the pretreatment liquid applied onto the impermeable base material is heated and dried under a condition that the residual moisture content is 0.03 g/m² or less.

In this case, the surface roughness Ra of the white image recorded on the colored image is easily adjusted to be in a range of 0.10 µm to 0.40 µm.

From the viewpoint of more effectively obtaining the above-described effects, it is more preferable that the pretreatment liquid applied onto the impermeable base material is heated and dried under a condition that the residual moisture content is 0.02 g/m² or less (still more preferably 0.008 g/m² or less).

Further, it is still more preferable that the heating and drying are performed within 70 seconds from the start of the heating and drying under a condition that the residual moisture content in the pretreatment liquid is 0.03 g/m² or less (more preferably 0.02 g/m² or less and still more preferably 0.008 g/m² or less).

In the present disclosure, the residual moisture content in the pretreatment liquid is confirmed by a Karl Fischer method. Specifically, the amount thereof is confirmed using a Karl Fischer moisture meter (for example, a trace moisture measuring device, model CA-310, manufactured by Nittoseiko Analytech Co., Ltd.).

The drying temperature in the heating and drying of the pretreatment liquid (that is, the temperature of the pretreatment liquid) is preferably 35°C or higher, more preferably 40°C or higher, still more preferably 50°C or higher, and even still more preferably 60°C or higher.

The upper limit of the heating temperature is not particularly limited, but is preferably 100°C and more preferably 90°C.

The drying time in the heating and drying of the pretreatment liquid is not particularly limited, but is preferably in a range of 0.5 seconds to 60 seconds, more preferably in a range of 0.5 seconds to 20 seconds, and still more preferably in a range of 0.5 seconds to 10 seconds.

### [Method of producing laminate]

The method of producing the laminate of the present disclosure includes a step of obtaining an image recorded material in which the colored image and the white image are disposed in this order on the impermeable base material using the ink jet recording method of the present disclosure described above, and a step of laminating a base material for lamination on the white image of the image recorded material, to obtain a laminate.

The method of producing a laminate of the present disclosure may include other steps as necessary.

The method of producing a laminate of the present disclosure includes the above-described ink j et recording method of the present disclosure.

Therefore, according to the method of producing a laminate of the present disclosure, the same effects as the effects obtained by the ink jet recording method of the present disclosure can be obtained.

That is, according to the method of producing a laminate of the present disclosure, a laminate which includes the image recorded material and a base material for lamination laminated on the white image of the image recorded material and has excellent lamination strength of the white image in the image recorded material and the base material for lamination can be produced.

The step of obtaining the image recorded material can refer to the ink jet recording method of the present disclosure described above.

The step of obtaining a laminate is a step of laminating the base material for lamination on the white image of the image recorded material to obtain a laminate.

In this case, the base material for lamination may be laminated to straddle the white image of the image recorded material and a region of the image recorded material where the white image is not recorded.

It is preferable that the base material for lamination is a resin base material.

The resin base material is not particularly limited, and examples thereof include a base material consisting of a thermoplastic resin.

A base material obtained by molding a thermoplastic resin in a sheet shape is exemplified as the resin base material.

It is preferable that the resin base material contains polypropylene, polyethylene terephthalate, nylon, polyethylene, or polyimide.

The shape of the resin base material is not particularly limited, but it is preferable that the resin base material has a sheet shape. The thickness of the resin base material is preferably in a range of 10 µm to 200 µm and more preferably in a range of 10 µm to 100 µm.

In the step of obtaining a laminate, the base material for lamination may be laminated on the white image directly or via another layer (for example, an adhesive layer).

In a case where the base material for lamination is laminated directly on the white image, the lamination can be performed by a known method such as thermocompression bonding or thermal fusion welding.

Further, in a case where the base material for lamination is laminated on the white image via an adhesive layer, the lamination can be performed by a method such as a method of coating a side where the image has been recorded with an adhesive, placing a base material for lamination, and bonding the image recorded material to the base material for lamination or a method of extrusion lamination (that is, sandwich lamination).

It is preferable that the adhesive layer contains an isocyanate compound. In a case where the adhesive layer contains an isocyanate compound, since the adhesiveness between the adhesive layer and the image is further improved, the lamination strength can be further improved.

### Examples

Hereinafter, examples of the present disclosure will be described below, but the present disclosure is not limited to the following examples.

### <Preparation of pretreatment liquid>

The components listed in Tables 1 to 3 (components in the columns of "components in pretreatment liquid other than water (% by mass)") and water were mixed to prepare pretreatment liquids.

Hereinafter, Tables 1 to 3 will be supplemented.

"-" denotes that the pretreatment liquid does not contain the corresponding component.

CATIOMASTER PD-7 is a water-soluble cationic polymer (aggregating agent, manufactured by Yokkaichi Chemical Co., Ltd.).

OLFINE E1010 and OLFINE E1020 are surfactants (manufactured by Nissin Chemical Industry Co., Ltd.).

SUPERFLEX M500 is an aqueous dispersion of urethane-based resin particles (manufactured by DKS Co., Ltd.).

BYK-024 is an antifoaming agent (manufactured by BYK-Chemie Japan K.K.).

### <Preparation of colored ink>

The components listed in Tables 1 to 3 (components in the columns of "components in colored ink other than water (% by mass)") and water were mixed to prepare colored inks.

In Tables 1 to 3, PG denotes propylene glycol serving as an organic solvent, and TEGO wet 280 is a base material wetting agent (manufactured by Evonik Industries AG).

Neocryl A-1105 (concentration of solid contents: 50.0% by mass, manufactured by DSM Co., Ltd.) was used as a dispersion liquid of acrylic resin particles.

APD1000 Magenta (pigment concentration of 14.0% by mass, manufactured by FUJIFILM Imaging Colorants Inc.) was used as a magenta PR122 pigment dispersion liquid.

APD1000 Red (pigment concentration of 14.3% by mass, manufactured by FUJIFILM Imaging Colorants Inc.) was used as a magenta PR254 pigment dispersion liquid.

As a magenta PR150 pigment dispersion liquid, a pigment dispersion liquid prepared in the following manner was used.

(Preparation of magenta PR150 pigment dispersion liquid)

### - Preparation of pigment dispersing agent P1 -

965 g of dipropylene glycol was added to a 5000 mL three-neck flask provided with a stirrer and a cooling pipe and heated to 85°C in a nitrogen atmosphere.

A solution I obtained by dissolving 640 g of benzyl methacrylate, 340 g of methacrylic acid, and 19.94 g of 2-mercaptopropionic acid in 370.28 g of dipropylene glycol and a solution II obtained by dissolving 17.69 g of t-butyl peroxy-2-ethylhexanoate (product name, "PERBUTYL O", manufactured by NOF Corporation) in 221.17 g of dipropylene glycol were respectively prepared.

The solution I was added dropwise to the three-neck flask for 4 hours, and the solution II was added dropwise thereto for 5 hours. Here, the dropwise addition of the solution I and the solution II was started at the same time.

After completion of the dropwise addition, the solution was allowed to further react for 2 hours.

The disappearance of the monomers was confirmed by ¹H-NMR.

The obtained reaction solution was heated to 70°C, 248.02 g of a 50 mass% potassium hydroxide aqueous solution was added thereto, 107.48 g of dipropylene glycol and 75.52 g of pure water were added thereto, and the solution was stirred, thereby obtaining a 37 mass% solution of a random polymer. This random polymer was defined as a pigment dispersing agent P1. The structural units constituting the obtained random polymer were confirmed by ¹H-NMR. In addition, the weight-average molecular weight (Mw) was acquired by GPC. The weight-average molecular weight (Mw) of the obtained pigment dispersing agent P1 was 8400, and the acid value thereof was 221.7 mgKOH/g.

### - Preparation of magenta PR150 pigment dispersion liquid -

150 parts by mass of the pigment dispersing agent P1 was dissolved in water, and a polymer aqueous solution was prepared such that the concentration of the pigment dispersing agent P1 was set to approximately 25% by mass. 180 parts by mass of the polymer aqueous solution, 90 parts by mass of PR-150 (FUJI FAST CARMINE 520, manufactured by Fuji Pigment Co., Ltd.), which is a magenta pigment, and 171.9 parts by mass of water were mixed with each other to obtain a mixed solution. A potassium hydroxide aqueous solution was added to the obtained mixed solution, and the pH after neutralization was adjusted to 8.7. Further, the pH is a value measured at 25°C using a pH meter (model name: WM-50EG, manufactured by DKK-Toa Corporation). Next, the mixed solution after neutralization was subjected to a dispersion treatment for 3 hours using a bead mill (bead diameter: 0.1 mmϕ, zirconia beads). In this manner, a magenta pigment dispersion liquid (uncrosslinked dispersion liquid) in which the magenta pigment was dispersed by the pigment dispersing agent P1 was obtained. The concentration of the pigment in the uncrosslinked dispersion liquid was 15% by mass.

Next, 3.00 parts by mass of trimethylolpropane polyglycidyl ether (product name, "Denacol EX-321", manufactured by Nagase ChemteX Corporation) as a crosslinking agent and 32.8 parts by mass of a boric acid aqueous solution (concentration of boric acid: 4% by mass) were added to 136 parts by mass of the uncrosslinked dispersion liquid, and the mixture was allowed to react at 70°C for 6 hours and cooled to 25°C. In this manner, the pigment dispersing agent P1 was crosslinked to obtain a magenta pigment dispersion liquid (crosslinked dispersion liquid) in which the magenta pigment was dispersed by the pigment dispersing agent P1a. Here, the pigment dispersing agent P1a is a polymer in which the pigment dispersing agent P1 is crosslinked with a crosslinking agent. Ion exchange water was added to the crosslinked dispersion liquid so that the concentration of the pigment was set to 15% by mass.

Ultrafiltration was performed by allowing the crosslinked dispersion liquid to which ion exchange water had been added to flow into an ultrafiltration device (cross-flow type ultrafilter (UF), manufactured by Sartorius AG) provided with a polyether sulfone (PESU) film (size of micropores: 0.1 µm) at a flow rate of 600 mL for 1 minute. At this time, the liquid temperature was adjusted to 25°C, and the ultrafiltration was performed 10 times by setting 1 time of the volume magnification of the charged liquid as 1 time. Ion exchange water was added such that the concentration of the pigment was set to 15% by mass. In this manner, a magenta PR150 pigment dispersion liquid was obtained.

The acid value of the pigment dispersing agent P1a (crosslinked polymer) contained in the magenta PR150 pigment dispersion liquid was 105 mgKOH/g.

### <Preparation of white ink>

The components listed in Tables 1 to 3 (components in the columns of "components in white ink other than water (% by mass)") and water were mixed to prepare white inks.

In Tables 1 to 3, Neocryl A-1105 (concentration of solid contents: 50.0% by mass, manufactured by DSM Co., Ltd.) was used as a dispersion liquid of acrylic resin particles, and Solsperse 43000 (concentration of solid contents: 50.0% by mass, manufactured by The Lubrizol Corporation) was used as the acrylic water-soluble polymer.

As the aqueous white pigment dispersion liquid and the aqueous white pigment crosslinked dispersion liquid, dispersion liquids prepared in the following manner were used.

### (Aqueous white pigment dispersion liquid)

### - Synthesis of polymer dispersing agent (block polymer 1) -

A block polymer 1 serving as a polymer dispersing agent was synthesized with reference to Synthesis Example 8 of JP2015-83688A. The details are described below.

Diethylene glycol dimethyl ether (266 parts by mass; polymerization solvent), 2-iodo-2-cyanopropane (6.2 parts by mass; polymerization initiation compound), methyl methacrylate (MMA) (120 parts by mass; monomer), acrylic acid (AA) (28.8 parts by mass; monomer), cyclohexyl methacrylate (CHMA) (67.2 parts by mass; monomer), azobisdimethylisovaleronitrile (7.9 parts by mass), and 2-t-butyl-4,6-dimethylphenol (0.7 parts by mass; catalyst) were added to a 1 L separable flask reactor equipped with a stirrer, a backflow condenser, a thermometer, and a nitrogen introduction pipe, and the mixture was stirred while nitrogen was allowed to flow.

Next, the temperature (reaction temperature) of the mixture in the reactor was increased to 70°C, and the mixture was polymerized for 3 hours, thereby obtaining a polymerization solution A containing an MMA/AA/CHMA copolymer.

After 3 hours, as a result of sampling a part of the polymerization solution A and measuring the solid content, the solid content was 42.0% by mass, and thus it was confirmed that most of the monomers were polymerized.

Further, in a case where the molecular weight of the MMA/AA/CHMA copolymer was measured by GPC, the weight-average molecular weight (Mn) was 7,500.

The acid value of this MMA/AA/CHMA copolymer was 101.0 mgKOH/g.

Next, a mixture of benzyl methacrylate (BzMA) (35.2 parts by mass; monomer) and V-65 (0.3 parts by mass; radical generator) was added to the polymerization solution A described above, and the mixture was polymerized at 70°C for 3 hours, thereby obtaining a polymerization solution B containing the block polymer 1 as a polymer dispersing agent.

Here, the block polymer 1 is a block polymer containing an A block which is an MMA/AA/CHMA copolymer and a B block which is a BzMA homopolymer.

As a result of measurement of the solid content in the obtained polymerization solution B, the solid content thereof was 43.2% by mass and it was confirmed that most of the monomers were polymerized.

Further, the Mw of the block polymer 1 was 8,500, and the acid value thereof was 89.3 mgKOH/g.

### <Preparation of aqueous white pigment dispersion liquid>

The block polymer 1 (136.4 parts by mass), butyl carbitol (163.6 parts by mass), and C.I. Pigment White 6 (trade name, "JR-405", manufactured by Tayca Co., Ltd., titanium dioxide particles) (450 parts by mass) as a white pigment were blended with each other and stirred with a disper. Next, the white pigment was sufficiently dispersed using a horizontal media disperser, thereby obtaining an oil-based pigment dispersion liquid. The average particle diameter of the white pigment dispersed in the oil-based pigment dispersion liquid was 290 nm. The viscosity of the oil-based pigment dispersion liquid was 86.3 mPa s.

Next, a mixed solution consisting of potassium hydroxide (4.0 parts by mass) and water (341 parts by mass) was gradually added to the oil-based pigment dispersion liquid (700 parts by mass) while being stirred using a disper, and the solution was neutralized. Thereafter, the white pigment was sufficiently dispersed using a horizontal media disperser, thereby obtaining a pigment dispersion liquid.

Next, ultrafiltration was performed by allowing ion exchange water to flow through the obtained pigment dispersion liquid at a flow rate of 600 mL per minute using an ultrafiltration device (cross-flow type ultrafilter (UF), manufactured by Sartorius AG). The liquid temperature was maintained at 25°C, and the ultrafiltration was performed ten times by setting one time the volume of the charged liquid to once. Ion exchange water was added thereto to obtain an aqueous white pigment dispersion liquid in which the pigment concentration was 45% by mass and the concentration of the pigment dispersing agent (block polymer) was 3.7% by mass.

### (Aqueous white pigment crosslinked dispersion liquid)

### - Synthesis of uncrosslinked polymer dispersing agent N1 -

965 g of dipropylene glycol was added to a 5000 mL three-neck flask provided with a stirrer and a cooling pipe and heated to 85°C in a nitrogen atmosphere.

A solution I obtained by dissolving 640 g of benzyl methacrylate, 340 g of methacrylic acid, and 19.94 g of 2-mercaptopropionic acid in 370.28 g of dipropylene glycol and a solution II obtained by dissolving 17.69 g of t-butyl peroxy-2-ethylhexanoate (product name, "PERBUTYL O", manufactured by NOF Corporation) in 221.17 g of dipropylene glycol were respectively prepared.

The solution I was added dropwise to the three-neck flask for 4 hours, and the solution II was added dropwise thereto for 5 hours. After completion of the dropwise addition, the solution was allowed to further react for 2 hours. The disappearance of the monomers was confirmed by ¹H-NMR. The obtained reaction solution was heated to 70°C, 248.02 g of a 50 mass% potassium hydroxide aqueous solution was added thereto, 107.48 g of dipropylene glycol and 75.52 g of pure water were added thereto, and the solution was stirred, thereby obtaining a 37 mass% solution of a random polymer. This random polymer was defined as an uncrosslinked polymer dispersing agent N1.

The structural units constituting the obtained random polymer (that is, the uncrosslinked polymer dispersing agent N1) were confirmed by ¹H-NMR. In addition, the weight-average molecular weight (Mw) was acquired by GPC. The weight-average molecular weight (Mw) of the obtained uncrosslinked polymer dispersing agent N1 was 8400, and the acid value thereof was 221.7 mgKOH/g.

### - Preparation of white pigment dispersion liquid N formed of uncrosslinked polymer dispersing agent N1 -

The uncrosslinked polymer dispersing agent N1 (150 parts by mass) was dissolved in water to prepare a polymer solution in which the concentration of the uncrosslinked polymer dispersing agent N1 was 25% by mass.

96 parts by mass of the polymer solution, 300 parts by mass of C.I. Pigment White 6 (trade name, "JR-405", manufactured by Tayca Co., Ltd., titanium dioxide particles) as a white pigment, and 270 parts by mass of water were mixed to obtain a mixed solution. A potassium hydroxide aqueous solution was added to the obtained mixed solution, and the pH after neutralization was adjusted to 8.7. Further, the pH is a value measured at 25°C using a pH meter (model name: WM-50EG, manufactured by DKK-Toa Corporation). Next, the mixed solution after neutralization was subjected to a dispersion treatment for 3 hours using a bead mill (bead diameter: 0.1 mmcp, zirconia beads). In this manner, a white pigment dispersion liquid N (uncrosslinked dispersion liquid) in which the white pigment was dispersed by the uncrosslinked polymer dispersing agent N1 was obtained. The pigment concentration of the uncrosslinked dispersion liquid was 45% by mass, and the concentration of the uncrosslinked polymer dispersing agent N1 was 3.6% by mass.

### - Preparation of aqueous white pigment crosslinked dispersion liquid formed of crosslinked polymer dispersing agent L1 -

2.70 parts by mass of trimethylolpropane polyglycidyl ether (product name, "Denacol EX-321", manufactured by Nagase ChemteX Corporation) as a crosslinking agent and 29.5 parts by mass of a boric acid aqueous solution (concentration of boric acid: 4% by mass) were added to 136 parts by mass of the white pigment dispersion liquid N (uncrosslinked dispersion liquid) in which the white pigment was dispersed by the uncrosslinked polymer dispersing agent N1, and the mixture was allowed to react at 70°C for 6 hours and cooled to 25°C. In this manner, the uncrosslinked polymer dispersing agent N1 in the dispersion liquid was crosslinked to form a crosslinked polymer dispersing agent L1, thereby obtaining a crosslinked dispersion liquid in which the white pigment was dispersed by the crosslinked polymer dispersing agent L1.

Ion exchange water was added to the obtained crosslinked dispersion liquid such that the concentration of the pigment was set to 15% by mass. Ultrafiltration was performed by allowing the crosslinked dispersion liquid to which ion exchange water had been added to flow into an ultrafiltration device (cross-flow type ultrafilter (UF), manufactured by Sartorius AG) provided with a polyether sulfone (PESU) film (size of micropores: 0.1 µm) at a flow rate of 600 mL for 1 minute. At this time, the liquid temperature was adjusted to 25°C, and the ultrafiltration was performed 8 times by setting 1 time of the volume magnification of the charged liquid as 1 time. Next, ion exchange water was added such that the concentration of the white pigment was set to 45% by mass. In this manner, an aqueous white pigment crosslinked dispersion liquid was obtained. The acid value of the crosslinked polymer dispersing agent L1 contained in the aqueous white pigment crosslinked dispersion liquid was 105 mgKOH/g. Further, the concentration of the crosslinked polymer dispersing agent L1 was 3.6% by mass.

The crosslinked polymer dispersing agent L1 was a crosslinked polymer in which the uncrosslinked polymer dispersing agent N1 was crosslinked with polyethylene glycol diglycidyl ether serving as a crosslinking agent.

### [Examples 3 to 17 and Comparative Examples 1 to 3]

### <Image recording>

A polyethylene terephthalate (PET) base material (product name, "FE2001", manufactured by Futamura Chemical Co., Ltd., thickness of 12 µm, width of 100 mm, length of 240 mm) was prepared as an impermeable base material (hereinafter, also simply referred to as "base material".

An image recording device including a transport mechanism for transporting the base material, and a wire bar coater for applying the pretreatment liquid, a first ink jet head for applying the colored ink, and a second ink jet head for applying the white ink in this order from the upstream side in the transport direction of the base material was prepared.

As both the first inkjet head and the second ink jet head, 1200 dpi/20 inch-width piezo full line heads were used. Here, dpi is an abbreviation for dot per inch.

Both the first ink jet head and the second ink jet head were line heads in which the heads were arranged in a direction (that is, the width direction of the base material) orthogonal to the transport direction of the base material.

As each of the above-described ink jet heads, Samba G3L (manufactured by FUJIFILM DIMATIX) was used.

An image was recorded by setting the base material, the pretreatment liquid, the colored ink, and the white ink on the image recording device and applying the pretreatment liquid, the colored ink, and the white ink onto the base material under a condition that a region where a region to which the pretreatment liquid was applied, a region to which the colored ink was applied, and a region where the white ink was applied overlapped each other in plan view was generated. In this manner, an image recorded material was obtained.

The pretreatment liquid was applied onto the base material using a wire bar coater while the base material was moved at a constant speed of 50 mm/sec. The mass of the pretreatment liquid applied was set to 1.5 g/m².

The mass of the pretreatment liquid to be applied is a value obtained by dividing the mass of the applied pretreatment liquid by the area of the region where the pretreatment liquid was applied.

The pretreatment liquid was dried with hot air using a dryer from a site where the application of the pretreatment liquid was completed under the conditions listed in Tables 1 to 3.

The time taken from the completion of the application of the pretreatment liquid to the start of the drying with hot air was defined as the time listed in "time required to dry" of Tables 1 to 3.

The residual moisture content after the pretreatment liquid was dried listed in Tables 1 to 3 is a value obtained as a result of measurement performed using a Karl Fischer moisture meter.

While the base material after the pretreatment liquid was completely dried was allowed to move at a constant speed of 50 m/min, the colored ink was jetted from the first ink jet head and applied onto the dried pretreatment liquid in the form of a solid image, and the white ink was jetted from the second ink jet head onto the applied colored ink. Here, the white ink was applied to the entire colored ink applied onto the base material. That is, both applied regions were set to be the same region.

Here, both the colored ink and the white ink were jetted under the conditions of a resolution of 1200 dpi × 1200 dpi (dot per inch) and a frequency described in the examples (jetting frequency of 39.37 kHz in Example 1).

The liquid droplet amount of the colored ink was set to 3.0 nanograms, and the mass of the colored ink applied was set to 6.7 g/m².

The liquid droplet amount of the white ink was set to 3.0 nanograms, and the mass of the white ink applied was set to 6.7 g/m².

Further, an ink which was degassed through a degassing filter and in which the temperature thereof was adjusted to 30°C was used as each of the colored ink and the white ink.

The white ink applied onto the colored ink on the base material was dried with infrared (IR) rays under conditions in which the surface temperature of the base material was set as listed in Tables 1 to 3 using an infrared (IR) irradiation device (PLC-328, manufactured by Noritake Co., Ltd.), and further dried with hot air using a dryer under the conditions listed in Tables 1 to 3.

The time taken from the completion of the application of the colored ink to the start of IR drying was defined as the time listed in "time taken to dry" in Tables 1 to 3.

The residual solvent amount after the drying in Tables 1 to 3 is a value obtained by performing measurement by gas chromatograph.

As described above, an image recorded material in which the colored image and the white image were disposed in this order on the impermeable base material was obtained.

The surface roughness Ra of the white image on the colored image in the image recorded material (that is, the arithmetic average roughness Ra in conformity with JIS B 0601:2001) was measured using a color 3D laser microscope "VK-9710" (manufactured by KEYENCE CORPORATION).

The results are listed in Tables 1 to 3.

### <Evaluation of lamination strength>

### (Preparation of lamination strength evaluation sample)

A region having a length of 200 mm and a width of 100 mm (hereinafter, also referred to as a lamination strength evaluation region) in which the solid image was provided on the entire surface was cut out from the image recorded material obtained in the above-described manner and used as a lamination strength evaluation sample.

The solid image in the lamination strength evaluation sample was coated with an adhesive for dry lamination (main agent TM-320 (isocyanate compound)/curing agent CAT-13B (alcohol compound), manufactured by Toyo-Morton, Ltd.) using a bar coater and dried at 70°C for 10 seconds, and a cast polypropylene (CPP) film (trade name: PYLEN P1128, manufactured by Toyobo Co., Ltd., thickness of 25 µm) was superimposed thereon as the base material for lamination. In this state, the base material for lamination and the lamination strength evaluation sample were attached to each other, thereby obtaining a laminate.

The obtained laminate was aged at 40°C for 48 hours.

### (Evaluation of lamination strength)

A sample piece having a length of 100 mm and a width of 15 mm was cut out from the aged laminate.

Next, the base material for lamination and the lamination strength evaluation sample in a region from the one end in the longitudinal direction to a length of 30 mm in the sample piece were peeled by hand. The remaining region with a length of 70 mm was allowed to remain in a state where the base material for lamination and the lamination strength evaluation sample were attached to each other.

Next, a tensile test of stretching the peeled portion of the base material for lamination and the peeled portion of the lamination strength evaluation sample in opposite directions in the sample piece was performed. The stretching direction was a direction perpendicular to the above-described remaining region with a length of 70 mm (the remaining region in a state where the base material for lamination and the lamination strength evaluation sample were attached to each other).

The peel strength for peeling the base material for lamination and the sample for evaluating the lamination strength in the remaining region with a length of 70 mm was acquired by performing the tensile test, and the obtained peel strength was set as the lamination strength.

Based on the obtained lamination strength, the lamination strength between the sample for evaluating the lamination strength (that is, the image recorded material) and the base material for lamination was evaluated based on the following evaluation standards. In this manner, the lamination strength between the image and the base material for lamination in the image recorded material was evaluated.

The results are listed in Tables 1 to 3.

Further, the tensile test was performed using a tensile tester (TENSILON RTM-25, manufactured by Orientec Co., Ltd.).

In the following evaluation standards, the rank at which the lamination strength was most excellent is A.

### - Evaluation standards for lamination strength (L strength) -

AA: The lamination strength between the image recorded material and the base material for lamination was 2 N/15 mm or greater.
B: The lamination strength between the image recorded material and the base material for lamination was 1.5 N/15 mm or greater and less than 2 N/15 mm.
A: The lamination strength between the image recorded material and the base material for lamination was 1 N/15 mm or greater and less than 1.5 N/15 mm.
B: The lamination strength between the image recorded material and the base material for lamination was 0.5 N/15 mm or greater and less than 1 N/15 mm.
C: The lamination strength between the image recorded material and the base material for lamination was less than 0.5 N/15 mm.

### [Examples 1 and 2]

The same operation as in Example 3 was performed except that the pretreatment liquid was not used, the components of the colored ink were changed as listed in Table 1, and the colored ink on the base material was dried under the conditions listed in Table 1 after the application of the colored ink and before the application of the white ink.

The results are listed in Table 1.

### [Example 18]

The same operation as in Example 3 was performed except that the colored ink on the base material was dried under the conditions listed in Table 2 after the application of the colored ink and before the application of the white ink.

The results are listed in Table 2.

### [Examples 19 and 20]

The same operation as in Example 3 was performed except that the components of the pretreatment liquid were changed as listed in Table 2 and the colored ink on the base material was dried under the conditions listed in Table 2 after the application of the colored ink and before the application of the white ink.

The results are listed in Table 2.

**[Table 1]**

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Components of pretreatment liquid other than water (% by mass) | Aggregatin g agent | Glutaric acid | Pretreat ment liquid was not used | Pretreat ment liquid was not used | 5.0 | 5.0 | 5.0 | 5.0 | 5.0 | 5.0 | 5.0 | - |
| | | Adipic acid | | | 0.6 | 0.6 | 0.6 | 0.6 | 0.6 | 0.6 | 0.6 | - |
| | | Calcium formate | | | - | - | - | - | - | - | - | 5.0 |
| | | Calcium lactate | | | - | - | - | - | - | - | - | 3.0 |
| | | CATIOMASTER PD-7 (solid content) | | | - | - | - | - | - | - | - | - |
| | | Succinic acid | | | 0.5 | 0.5 | 0.5 | 0.5 | 0.5 | 0.5 | 0.5 | 0.5 |
| | Surfactant | OLFINE E1010 | | | 0.5 | 0.5 | 0.5 | 0.5 | 0.5 | 0.5 | 0.5 | 0.5 |
| | | OLFINE E1020 | | | 0.5 | 0.5 | 0.5 | 0.5 | 0.5 | 0.5 | 0.5 | 0.5 |
| | Resin particles | SUPERFLEX M500 (urethane-based) | | | 7 | 7 | 7 | 7 | 7 | 7 | 7 | 7 |
| | pH adjuster | Triisopropanolam ine | | | 0.2 | 0.2 | 0.2 | 0.2 | 0.2 | 0.2 | 0.2 | 0.2 |
| | Antifoamin g agent | BYK-024 | | | 0.01 | 0.01 | 0.01 | 0.01 | 0.01 | 0.01 | 0.01 | 0.01 |
| Conditions for drying pretreatment liquid | Time taken to dry | | Pretreat ment liquid was not used | Pretreat ment liquid was not used | 3s | 3s | 3s | 3s | 3s | 3s | 3s | 3s |
| | Hot air drying | Temperature | | | 60°C | 60°C | 60°C | 60°C | 60°C | 60°C | 60°C | 60°C |
| | | Time | | | 5s | 2s | 5s | 5s | 5s | 5s | 5s | 5s |
| | Residual moisture amount after drying (g/m²) | | | | 0.008 | 0.040 | 0.008 | 0.008 | 0.008 | 0.008 | 0.008 | 0.007 |
| Components of colored ink other than water (% by mass) | Magenta PR122 pigment dispersion liquid (numerical value denotes concentration of pigment in ink) | | 4 | 4 | 6 | 6 | 6 | 6 | 6 | 6 | 6 | 6 |
| | Magenta PR254 pigment dispersion liquid (numerical value denotes concentration of pigment in ink) | | - | - | - | - | - | - | - | - | - | - |
| | Magenta PR150 pigment dispersion liquid (numerical value denotes concentration of pigment in ink) | | - | - | - | - | - | - | - | - | - | - |
| | Acrylic resin particles (numerical value denotes solid content) | | 8 | 8 | 8 | 8 | 8 | 8 | 8 | 8 | 8 | 8 |
| | Organic solvent | PG | 30 | 30 | 30 | 30 | 30 | 30 | 30 | 30 | 30 | 30 |
| | Base material wetting agent | TEGO wet 280 | 1 | 1 | 1 | 1 | 1 | 1 | 1 | 1 | 1 | 1 |
| | Surfactant | OLFINE E1010 | 1 | 1 | 1 | 1 | 1 | 1 | 1 | 1 | 1 | 1 |
| Conditions for drying colored ink | Time taken to dry | | 1s | Is | - | - | - | - | - | - | - | - |
| | IR drying | Temperature | 70°C | 70°C | - | - | - | - | - | - | - | - |
| | | Time | 20s | 15s | - | - | - | - | - | - | - | - |
| | Hot air drying | Temperature | 70°C | 70°C | - | - | - | - | - | - | - | - |
| | | Time | 20s | 15s | - | - | - | - | - | - | - | - |
| | Residual moisture amount after drying (g/m²) | | 0.05 | 0.13 | - | - | - | - | - | - | - | - |
| Components of white ink other than water (% by mass) | Aqueous white pigment dispersion liquid (numerical value denotes concentration of pigment in ink) | | 15 | 15 | 15 | 15 | 15 | 15 | 15 | 15 | 15 | 15 |
| | Aqueous white pigment crosslinked dispersion liquid (numerical value denotes concentration of pigment in ink) | | - | - | - | - | - | - | - | - | - | - |
| | Acrylic resin particles (numerical value denotes solid content) | | 8 | 8 | 8 | 8 | 8 | 8 | 8 | 8 | 8 | 8 |
| | Acrylic water-soluble polymer (numerical value denotes solid content) | | - | - | - | - | - | - | - | - | - | - |
| | Organic solvent | PG | 23 | 23 | 23 | 23 | 23 | 23 | 23 | 23 | 23 | 23 |
| | | 1-Hexanol | 2 | 2 | 2 | 2 | 2 | 2 | 2 | 2 | 2 | 2 |
| | Antifoamin g agent | BYK-024 | 0.01 | 0.01 | 0.01 | 0.01 | 0.01 | 0.01 | 0.01 | 0.01 | 0.01 | 0.01 |
| | Base material wetting agent | TEGO wet 280 | 1 | 1 | 1 | 1 | 1 | 1 | 1 | 1 | 1 | 1 |
| | Surfactant | OLFINE E1010 | 1 | 1 | 1 | 1 | 1 | 1 | 1 | 1 | 1 | 1 |
| | Particle diameter of white pigment (nm) | | 300 | 300 | 300 | 300 | 300 | 300 | 300 | 300 | 300 | 300 |
| Conditions for drying white ink | Time taken to dry | | 2s | 2s | 5s | 5s | 2s | 5s | 8s | 12s | 5s | 5s |
| | IR drying | Temperature | 70°C | 70°C | 70°C | 70°C | 70°C | 70°C | 70°C | 70°C | 70°C | 70°C |
| | | Time | 20s | 20s | 20s | 20s | 20s | 60s | 20s | 20s | 15s | 20s |
| | Hot air drying | Temperature | 70°C | 70°C | 70°C | 70°C | 70°C | 70°C | 70°C | 70°C | 70°C | 70°C |
| | | Time | 20s | 20s | 20s | 20s | 20s | 20s | 20s | 20s | 15s | 20s |
| | Residual moisture amount after drying (g/m²) | | 0.04 | 0.08 | 0.05 | 0.05 | 0.03 | 0.002 | 0.07 | 0.11 | 0.15 | 0.05 |
| White image | Amount of white pigment (g/m²) | | 1.0 | 1.0 | 1.0 | 1.0 | 1.0 | 1.0 | 1.0 | 1.0 | 1.0 | 1.0 |
| | Surface roughness Ra (nm) | | 0.12 | 0.11 | 0.14 | 0.15 | 0.16 | 0.34 | 0.12 | 0.11 | 0.13 | 0.14 |
| Evaluation results | Lamination strength | | B | C | A | AA | AA | C | B | C | B | A |

**[Table 2]**

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Components of pretreatment liquid other than water (% by mass) | Aggregatin g agent | Glutaric acid | - | 5.0 | 5.0 | 5.0 | 5.0 | 5.0 | 5.0 | 5.0 | - | - |
| | | Adipic acid | - | 0.6 | 0.6 | 0.6 | 0.6 | 0.6 | 0.6 | 0.6 | - | - |
| | | Calcium formate | - | - | - | - | - | - | - | - | 5.0 | - |
| | | Calcium lactate | - | - | - | - | - | - | - | - | 3.0 | - |
| | | CATIOMASTER PD-7 (solid content) | 11.5 | - | - | - | - | - | - | - | - | 11.5 |
| | | Succinic acid | 0.5 | 0.5 | 0.5 | 0.5 | 0.5 | 0.5 | 0.5 | 0.5 | 0.5 | 0.5 |
| | Surfactant | OLFINE E1010 | 0.5 | 0.5 | 0.5 | 0.5 | 0.5 | 0.5 | 0.5 | 0.5 | 0.5 | 0.5 |
| | | OLFINE E1020 | 0.5 | 0.5 | 0.5 | 0.5 | 0.5 | 0.5 | 0.5 | 0.5 | 0.5 | 0.5 |
| | Resin particles | SUPERFLEX M500 (urethane-based) | 7 | 7 | 7 | 7 | 7 | 7 | 7 | 7 | 7 | 7 |
| | pH adjuster | Triisopropanolami ne | 0.2 | 0.2 | 0.2 | 0.2 | 0.2 | 0.2 | 0.2 | 0.2 | 0.2 | 0.2 |
| | Antifoamin g agent | BYK-024 | 0.01 | 0.01 | 0.01 | 0.01 | 0.01 | 0.01 | 0.01 | 0.01 | 0.01 | 0.01 |
| Conditions for drying pretreatment liquid | Time taken to dry | | 3s | 3s | 3s | - | 3s | 3s | 3s | 3s | 3s | 3s |
| | Hot air drying | Temperature | 60°C | 60°C | 60°C | - | 60°C | 60°C | 60°C | 60°C | 60°C | 60°C |
| | | Time | 5s | 5s | 5s | - | 5s | 5s | 5s | 5s | 5s | 5s |
| | Residual moisture amount after drying (g/m²) | | 0.011 | 0.008 | 0.008 | 0.550 | 0.008 | 0.008 | 0.008 | 0.008 | 0.007 | 0.011 |
| Components of colored ink other than water (% by mass) | Magenta PR122 pigment dispersion liquid (numerical value denotes concentration of pigment in ink) | | 6 | 6 | 6 | 6 | 6 | 4.5 | 4.5 | 6 | 6 | 6 |
| | Magenta PR254 pigment dispersion liquid (numerical value denotes concentration of pigment in ink) | | - | - | - | - | - | 1.5 | - | - | - | - |
| | Magenta PR150 pigment dispersion liquid (numerical value denotes concentration of pigment in ink) | | - | - | - | - | - | - | 1.5 | - | - | - |
| | Acrylic resin particles (numerical value denotes solid content) | | 8 | 8 | 8 | 8 | 8 | 8 | 8 | 8 | 8 | 8 |
| | Organic solvent | PG | 30 | 30 | 30 | 30 | 30 | 30 | 30 | 30 | 30 | 30 |
| | Base material wetting agent | TEGO wet 280 | 1 | 1 | 1 | 1 | 1 | 1 | 1 | 1 | 1 | 1 |
| | Surfactant | OLFINE E1010 | 1 | 1 | 1 | 1 | 1 | 1 | 1 | 1 | 1 | 1 |
| Conditions for drying colored ink | Time taken to dry | | - | - | | - | - | - | - | 1s | 1s | 1s |
| | IR drying | Temperature | - | - | | - | - | - | - | 70°C | 70°C | 70°C |
| | | Time | - | - | | - | - | - | - | 20s | 20s | 20s |
| | Hot air drying | Temperature | - | - | | - | - | - | - | 70°C | 70°C | 70°C |
| | | Time | - | - | | - | - | - | - | 20s | 20s | 20s |
| | Residual moisture amount after drying (g/m²) | | - | - | | - | - | - | - | 0.04 | 0.04 | 0.06 |
| Components of white ink other than water (% by mass) | Aqueous white pigment dispersion liquid (numerical value denotes concentration of pigment in ink) | | 15 | 15 | 15 | 15 | - | 15 | 15 | 15 | 15 | 15 |
| | Aqueous white pigment crosslinked dispersion liquid (numerical value denotes concentration of pigment in ink) | | - | - | - | - | 15 | - | - | - | - | - |
| | Acrylic resin particles (numerical value denotes solid content) | | 8 | 8 | - | 8 | 8 | 8 | 8 | 8 | 8 | 8 |
| | Acrylic water-soluble polymer (numerical value denotes solid content) | | - | - | 5 | - | - | - | - | - | - | - |
| | Organic solvent | PG | 23 | 23 | 23 | 23 | 23 | 23 | 23 | 23 | 23 | 23 |
| | | 1-Hexanol | 2 | 2 | 2 | 2 | 2 | 2 | 2 | 2 | 2 | 2 |
| | Antifoamin g agent | BYK-024 | 0.01 | 0.01 | 0.01 | 0.01 | 0.01 | 0.01 | 0.01 | 0.01 | 0.01 | 0.01 |
| | Base material wetting agent | TEGO wet 280 | 1 | 1 | 1 | 1 | 1 | 1 | 1 | 1 | 1 | 1 |
| | Surfactant | OLFINE E1010 | 1 | 1 | 1 | 1 | 1 | 1 | 1 | 1 | 1 | 1 |
| | Particle diameter of white pigment (nm) | | 300 | 210 | 300 | 300 | 300 | 300 | 300 | 300 | 300 | 300 |
| Conditions for drying white ink | Time taken to dry | | 5s | 5s | 5s | 5s | 5s | 5s | 5s | 2s | 2s | 2s |
| | IR drying | Temperature | 70°C | 70°C | 70°C | 70°C | 70°C | 70°C | 70°C | 70°C | 70°C | 70°C |
| | | Time | 20s | 20s | 20s | 20s | 20s | 20s | 20s | 20s | 20s | 20s |
| | Hot air drying | Temperature | 70°C | 70°C | 70°C | 70°C | 70°C | 70°C | 70°C | 70°C | 70°C | 70°C |
| | | Time | 20s | 20s | 20s | 20s | 20s | 20s | 20s | 20s | 20s | 20s |
| | Residual moisture amount after drying (g/m²) | | 0.08 | 0.04 | 0.07 | 0.23 | 0.04 | 0.04 | 0.04 | 0.03 | 0.03 | 0.03 |
| White image | Amount of white pigment (g/m²) | | 1.0 | 1.0 | 1.0 | 1.0 | 1.0 | 1.0 | 1.0 | 1.0 | 1.0 | 1.0 |
| | Surface roughness Ra (nm) | | 0.12 | 0.12 | 0.12 | 0.12 | 0.14 | 0.14 | 0.14 | 0.19 | 0.19 | 0.14 |
| Evaluation results | Lamination strength | | B | B | B | C | A | A | A | AA | AA | A |

**[Table 3]**

| | | | Comparative Example 1 | Comparative Example 2 | Comparative Example 3 |
|---|---|---|---|---|---|
| Components of pretreatment liquid other than water (% by mass) | Aggregating agent | Glutaric acid | 5.0 | 5.0 | 5.0 |
| | | Adipic acid | 0.6 | 0.6 | 0.6 |
| | | Calcium formate | - | - | - |
| | | Calcium lactate | - | - | - |
| | | CATIOMASTER PD-7 (solid content) | - | - | - |
| | | Succinic acid | 0.5 | 0.5 | 0.5 |
| | Surfactant | OLFINE E1010 | 0.5 | 0.5 | 0.5 |
| | | OLFINE E1020 | 0.5 | 0.5 | 0.5 |
| | Resin particles | SUPERFLEX M500 (urethane-based) | 7 | 7 | 7 |
| | pH adjuster | Triisopropanolamine | 0.2 | 0.2 | 0.2 |
| | Antifoaming agent | BYK-024 | 0.01 | 0.01 | 0.01 |
| Conditions for drying pretreatment liquid | Time taken to dry | | 3s | 3s | 3s |
| | Hot air drying | Temperature | 60°C | 60°C | 60°C |
| | | Time | 5s | 5s | 5s |
| | Residual moisture amount after drying (g/m²) | | 0.008 | 0.008 | 0.008 |
| Components of colored ink other than water (% by mass) | Magenta PR122 pigment dispersion liquid (numerical value denotes concentration of pigment in ink) | | 6 | 6 | 6 |
| | Magenta PR254 pigment dispersion liquid (numerical value denotes concentration of pigment in ink) | | - | - | - |
| | Magenta PR150 pigment dispersion liquid (numerical value denotes concentration of pigment in ink) | | - | - | - |
| | Acrylic resin particles (numerical value denotes solid content) | | 8 | 8 | 8 |
| | Organic solvent | PG | 30 | 30 | 30 |
| | Base material wetting agent | TEGO wet 280 | 1 | 1 | 1 |
| | Surfactant | OLFINE E1010 | 1 | 1 | 1 |
| Conditions for drying colored ink | Time taken to dry | | - | - | - |
| | IR drying | Temperature | - | - | - |
| | | Time | - | - | - |
| | Hot air drying | Temperature | - | - | - |
| | | Time | - | - | - |
| | Residual moisture amount after drying (g/m²) | | - | - | - |
| Components of white ink other than water (% by mass) | Aqueous white pigment dispersion liquid (numerical value denotes concentration of pigment in ink) | | 15 | 15 | 8 |
| | Aqueous white pigment crosslinked dispersion liquid (numerical value denotes concentration of pigment in ink) | | | | |
| | Acrylic resin particles (numerical value denotes solid content) | | 8 | 8 | 8 |
| | Acrylic water-soluble polymer (numerical value denotes solid content) | | | | |
| | Organic solvent | PG | 23 | 23 | 23 |
| | | 1-Hexanol | 2 | 2 | 2 |
| | Antifoaming agent | BYK-024 | 0.01 | 0.01 | 0.01 |
| | Base material wetting agent | TEGO wet 280 | 1 | 1 | 1 |
| | Surfactant | OLFINE E1010 | 1 | 1 | 1 |
| | Particle diameter of white pigment (nm) | | 300 | 300 | 300 |
| Conditions for drying white ink | Time taken to dry | | 5s | 5s | 5s |
| | IR drying | Temperature | - | 80°C | 70°C |
| | | Time | - | 60s | 20s |
| | Hot air drying | Temperature | 60°C | 80°C | 70°C |
| | | Time | 10s | 60s | 20s |
| | Residual moisture amount after drying (g/m²) | | 1.33 | 0.001 | 0.04 |
| White image | Amount of white pigment (g/m²) | 1.0 | 1.0 | 0.5 | |
| | Surface roughness Ra (nm) | 0.09 | 0.43 | 0.09 | |
| Evaluation results | Lamination strength | D | D | D | |

As listed in Tables 1 to 3, it was confirmed that the image recorded material in which the colored image and the white image were disposed in this order on the impermeable base material and which had excellent lamination strength in a case where a base material for lamination was laminated on the white image was produced by each of the ink jet recording methods of Examples 1 to 20, including a step of preparing a white ink containing water and a white pigment, a step of preparing a colored ink containing water and a color pigment, a step of applying the colored ink onto the impermeable base material using an ink jet method to obtain a colored image, and a step of applying the white ink onto the colored image using an ink jet method to obtain a white image having a surface roughness Ra of 0.10 µm to 0.40 µm.

On the contrary, the lamination strength was decreased in all of Comparative Examples 1 and 3 in which the surface roughness Ra of the obtained white image was less than 0.10 µm and Comparative Example 2 in which the surface roughness Ra of the obtained white image was greater than 0.40 µm.

As shown in the results of Examples 3 to 6, it was found that the lamination strength was particularly excellent in a case where the surface roughness Ra of the white image was in a range of 0.15 µm to 0.30 µm (Examples 4 and 5).

As shown in the results of Examples 3 and 13, it was found that the lamination strength was particularly excellent in a case where the white ink further contained resin particles (Example 3).

Example 13 is an example in which a water-soluble polymer was used in place of resin particles.

As shown in the results of Examples 7 and 8, it was found that the lamination strength was particularly excellent in a case where the time taken from the completion of the application of the white ink to the start of the heating and drying was 10 seconds or shorter (Example 7).

As shown in the results of Examples 1 and 18, it was found that the lamination strength was particularly excellent in a case where the ink jet recording method included a step of preparing a pretreatment liquid containing water and an aggregating agent and a step of applying the pretreatment liquid onto an impermeable base material, which was provided before the step of obtaining a colored image (Example 18).

The disclosure of JP2021-156435 filed on September 27, 2021 is incorporated herein by reference in its entirety. All documents, patent applications, and technical standards described in the present specification are incorporated herein by reference to the same extent as in a case of being specifically and individually noted that individual documents, patent applications, and technical standards are incorporated by reference.

## Claims

1. An inkjet recording method comprising:
a step of preparing a white ink containing water and a white pigment;
a step of preparing a colored ink containing water and a color pigment;
a step of applying the colored ink onto an impermeable base material using an inkjet method to obtain a colored image; and
a step of applying the white ink onto the colored image using an ink jet method to obtain a white image having a surface roughness Ra of 0.10 µm to 0.40 µm.

2. The inkjet recording method according to claim 1,
wherein the white image has a surface roughness Ra of 0.15 µm to 0.30 µm.

3. The inkjet recording method according to claim 1 or 2,
wherein an amount of the white pigment in the white image is 0.7 g/m² or greater.

4. The inkjet recording method according to any one of claims 1 to 3,
wherein the white ink further contains resin particles.

5. The inkjet recording method according to any one of claims 1 to 4,
wherein the step of obtaining the white image includes:
applying the white ink onto the colored image using an inkjet method; and
heating and drying the white ink applied onto the colored image under a condition that a time from completion of the application to start of the heating and drying is 10 seconds or shorter, to obtain the white image.

6. The inkjet recording method according to claim 5,
wherein the heating and drying are performed within 70 seconds from the start of the heating and drying under a condition that a residual solvent amount in the white ink applied onto the colored image is 0.10 g/m² or less.

7. The ink jet recording method according to any one of claims 1 to 6,
wherein the step of obtaining the colored image includes:
applying the colored ink onto the impermeable base material using an inkjet method; and
heating and drying the colored ink applied onto the impermeable base material under a condition that a residual solvent amount is 0.10 g/m² or less, to obtain the colored image.

8. The inkjet recording method according to any one of claims 1 to 7, further comprising:
a step of preparing a pretreatment liquid containing water and an aggregating agent; and
a step of applying the pretreatment liquid onto the impermeable base material, which is provided before the step of obtaining the colored image,
wherein the step of obtaining the colored image is a step of obtaining the colored image by applying the colored ink onto a region of the impermeable base material, to which the pretreatment liquid has been applied.

9. The inkjet recording method according to claim 8,
wherein the step of applying the pretreatment liquid includes:
applying the pretreatment liquid onto the impermeable base material; and
heating and drying the pretreatment liquid applied onto the impermeable base material under a condition that a residual moisture content is 0.03 g/m² or less.

10. A method of producing a laminate, comprising:
a step of obtaining an image recorded material in which the colored image and the white image are disposed in this order on the impermeable base material using the ink jet recording method according to any one of claims 1 to 9; and
a step of laminating a base material for lamination on the white image of the image recorded material, to obtain a laminate.
